# EUROPÄISCHE PATENTSCHRIFT

(11) **EP 3 347 393 B1**
(45) Veröffentlichungstag und Bekanntmachung des Hinweises auf die Patenterteilung: **04.11.2020**
(21) Anmeldenummer: 16760743.1
(22) Anmeldetag: 07.09.2016
(51) Int. Cl.: C08G 18/62, C08G 18/72, C08G 18/73, C08G 18/78, C08G 18/79, C08G 18/80, C08G 18/22, C09D 175/04, C08G 18/28, C08G 18/08

(54) **KRATZFESTE 2K-PUR-BESCHICHTUNGEN**
SCRATCH-RESISTANT 2K-PUR COATINGS
REVETEMENTS PUR BICOMPOSANTS RESISTANTS AUX RAYURES

(30) Priorität: 09.09.2015 EP 15184421
(43) Veröffentlichungstag der Anmeldung: 18.07.2018
(73) Patentinhaber: Covestro Intellectual Property GmbH & Co. KG, 51373 Leverkusen (DE)
(72) Erfinder: LAAS, Hans-Josef, 51519 Odenthal (DE); HEBESTREIT, Tanja, 51688 Wipperfürth (DE); WEIKARD, Jan, 51375 Leverkusen (DE)
(74) Vertreter: Levpat
(86) Internationale Anmeldenummer: PCT/EP2016/071004
(87) Internationale Veröffentlichungsnummer: WO 2017/042177

(56) Entgegenhaltungen:
- EP-A1- 3 085 718
- WO-A1-02/059224
- WO-A1-2009/156148
- WO-A1-2014/037265

## Beschreibung

Die Erfindung betrifft Beschichtungsmittel, die Silangruppen enthaltende Thioallophanate als Vernetzungsmittel enthalten, und die Verwendung dieser Beschichtungsmittel zur Herstellung von Beschichtungen, insbesondere von Klarlacken für die Automobillackierung.

Seit ihrer Einführung in die Automobilserienlackierung Mitte der 1980er Jahre haben Zweikomponenten-Polyurethan(2K-PUR)-Klarlacke aufgrund ihrer im Vergleich zu klassischen Acrylat/Melaminharz-Lacksystemen (Thermosetting Acrylics, TSA-Lacke) überlegenen technologischen Eigenschaften stetig an Marktanteilen gewonnen.

Die heutigen 2K-PUR-Klarlacke, die in der Regel hydroxyfunktionelle Poly(meth)acrylatharze enthalten, die mit aliphatischen Polyisocyanaten, insbesondere Derivaten des Hexamethylendiisocyanats (HDI), gegebenenfalls in Kombination mit Polyisocyanaten auf Basis des cycloaliphatischen Isophorondiisocyanats (IPDI) vernetzt werden, liefern Beschichtungen hoher mechanischer und chemischer Beständigkeit und sehr guter Optik.

Trotz des bereits erreichten hohen Qualitätsniveaus der 2K-PUR-Lacke besteht im Markt ein beständiges Interesse an Beschichtungssystemen mit immer weiter verbesserten Eigenschaften, insbesondere einer verbesserter Kratzbeständigkeit.

Eine Möglichkeit, die Kratzfestigkeit von Polyurethanlacken zu erhöhen, besteht in der Verwendung Silangruppen enthaltender Polyisocyanatvernetzer. Alkoxysilangruppen enthaltende Polyisocyanatgemische sind seit längerer Zeit bekannt. Derartige Produkte, die neben der Isocyanatgruppe eine zweite reaktive, d. h. zur Vernetzung fähige Struktur enthalten, wurden in der Vergangenheit in Polyurethansystemen für unterschiedliche Anwendungen zur Erzielung spezieller Eigenschaften, beispielsweise zur Verbesserung der Haftung, der Chemikalienbeständigkeit und auch der Kratzfestigkeit von Beschichtungen, eingesetzt.

So wurden beispielsweise in EP-A1 273 640 zur Verbesserung der Kratzbeständigkeit von Lösungsmittelhaltigen wärmehärtenden 2K-PUR-Automobil-Klarlacken bzw. -Decklacken Umsetzungsprodukte von aliphatischen und/oder cycloaliphatischen Polyisocyanaten mit N,N-Bis-(trialkoxysilylpropyl)-aminen als Vernetzerkomponente vorgeschlagen.

Weitere Veröffentlichungen beschreiben Beschichtungsmittel zur Herstellung wetterstabiler, kratzfester Klarlackschichten für die OEM-Serienlackierung und Automobilreparaturlackierung, bei denen als Vernetzerkomponenten Umsetzungsprodukte aliphatischer und/oder cycloaliphatischer Polyisocyanate mit molar unterschüssigen Mengen gegenüber Isocyanatgruppen reaktiver Alkoxysilane zum Einsatz kommen. Als geeignete reaktive Alkoxysilane werden dabei insbesondere spezielle Gemische von Bis(alkoxysilylalkyl)aminen mit N-Alkyl-mono(alkoxysilylalkyl)aminen (z. B. WO 2008/074489, WO 2008/074490, WO 2010/149236 und WO 2014/086530) sowie Mercaptoalkylalkoxysilane und/oder sekundären Alkoxysilylalkylaminen (z. B. WO 2009/156148) genannt.

All diesen Silangruppen enthaltenden Polyisocyanatgemischen gemeinsam ist, dass sie durch anteilige Umsetzung von unmodifizierten Polyisocyanaten mit gegenüber Isocyanatgruppen reaktive Gruppen enthaltenden organofunktionellen Silanen, beispielsweise mercaptofunktionellen Silanen, primären Aminoalkylsilanen, sekundären N-alkylsubstituierten Aminoalkylsilanen oder alkoxysilanfunktionellen Asparaginsäureestern hergestellt werden.

Eine solche Umsetzung führt jedoch zwangsläufig zu einer Erniedrigung der mittleren Isocyanatfunktionalität bezogen auf die der eingesetzten Ausgangspolyisocyanate, was sich um so stärker auswirkt, je höher der angestrebte Silan-Gehalt im Reaktionsprodukt ist. In der Praxis sind in den obengenannten Anwendungen, wie z. B. Klarlacken, zur Erzielung einer hohen Netzwerkdichte aber gerade Polyisocyanatvernetzer mit möglichst hoher Isocyanatfunktionalität erwünscht.

Darüber hinaus nimmt mit steigendem Modifizierungsgrad, d. h. Silangruppen-Gehalt, auch die Viskosität der Produkte aufgrund der ins Molekül eingebrachten Thiourethan- und insbesondere Harnstoffgruppen drastisch zu, weshalb sich die bisher bekannten Silangruppen enthaltenden Polyisocyanate in der Regel nur unter Verwendung erheblicher Mengen organischer Lösungsmittel in gelöster Form einsetzen lassen.

Eine Ausnahme diesbezüglich stellen die in der EP-A2 014 692 und EP-A2 305 691 beschriebenen, durch Umsetzung von Silangruppen enthaltenden Hydroxyurethanen bzw. Hydroxyamiden mit überschüssigen Mengen monomerer Diisocyanate erhältlichen Allophanat- und Silangruppen enthaltenden Polyisocyanate dar, die trotz hoher Isocyanatfunktionalitäten und hoher Silangehalte vergleichsweise niedrige Viskositäten aufweisen. Die Herstellung dieser speziellen silanfunktionellen Polyisocyanate ist allerdings aufgrund der geringen Stabilität der aus Aminoalkylsilanen mit cyclischen Carbonaten bzw. Lactonen gebildeten Hydroxyurethan- bzw. Hydroxyamid-Zwischenstufen sehr aufwendig und schlecht reproduzierbar.

Aus der WO 2014/037265 sind Zusammensetzungen bekannt geworden, zu deren Herstellung Mercaptopropyltrimethoxysilan (1 mol) mit einem Überschuß von HDI (10 mol) umgesetzt wird. Unter den gewählten Reaktionsbedingungen (80 °C, DABCO-Katalyse) bleibt die Reaktion auf der Stufe des Thiourethans stehen. Es entstehen keine Thioallophanatgruppen.

Aufgabe der vorliegenden Erfindung war es daher, neue Beschichtungsmittel auf Basis Silangruppen enthaltender Polyisocyanate zur Verfügung zu stellen, die zu hoch kratzfesten Lacken aushärten. Die in diesen Beschichtungsmitteln zum Einsatz kommenden Silangruppen enthaltenden Polyisocyanatvernetzer, sollten dabei in einem einfachen Verfahren sicher und reproduzierbar herstellbar sein und insbesondere auch bei hohen Silangruppengehalten niedrige Viskositäten aufweisen.

Diese Aufgabe konnte mit der Bereitstellung der nachfolgend näher beschriebenen erfindungsgemäßen Beschichtungsmittel gelöst werden.

Gegenstand der vorliegenden Erfindung sind nichtwässrige Beschichtungsmittel, enthaltend
A) mindestens eine Polyisocyanatkomponente,
B) mindestens eine hydroxyfunktionelle Bindemittelkomponente,
C) mindestens einen Katalysator zur Vernetzung von Silangruppen und
D) gegebenenfalls weitere Hilfs- und Zusatzstoffe,
wobei die Polyisocyanatkomponente A) mindestens ein Silangruppen enthaltendes Thioallophanat der allgemeinen Formel (I) 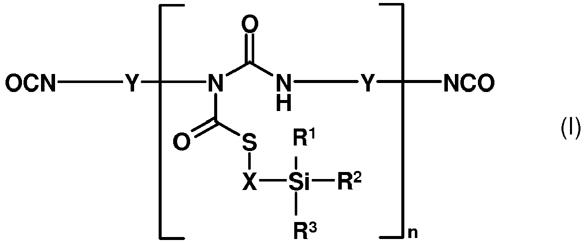 enthält, in welcher
- R¹, R² und R³: für gleiche oder verschiedene Reste stehen und jeweils einen gesättigten, linearen oder verzweigten, aliphatischen oder cycloaliphatischen Rest mit bis zu 6 Kohlenstoffatomen bedeuten, der gegebenenfalls bis zu 3 Sauerstoffatome enthalten kann,
- X: für einen linearen oder verzweigten Alkylenrest mit 2 bis 10 Kohlenstoffatomen steht,
- Y: einen linearen oder verzweigten, aliphatischen oder cycloaliphatischen Rest mit 5 bis 13 Kohlenstoffatomen bedeutet und
- n: für eine ganze Zahl von 1 bis 20 steht.

Gegenstand der Erfindung ist auch die Verwendung dieser Beschichtungsmittel zur Herstellung von Polyurethanlacken, insbesondere zur Herstellung von Klarlacken für die Automobillackierung.

Die Polyisocyanatkomponente A) der erfindungsgemäßen Beschichtungsmittel enthält mindestens ein Silangruppen enthaltendes Thioallophanat der allgemeinen Formel (I) 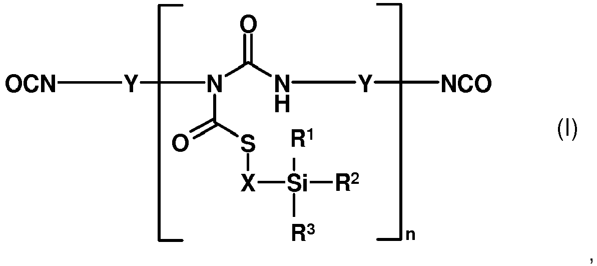 in welcher
- R¹, R² und R³: für gleiche oder verschiedene Reste stehen und jeweils einen gesättigten, linearen oder verzweigten, aliphatischen oder cycloaliphatischen Rest mit bis zu 6 Kohlenstoffatomen bedeuten, der gegebenenfalls bis zu 3 Sauerstoffatome enthalten kann,
- X: für einen linearen oder verzweigten Alkylenrest mit 2 bis 10 Kohlenstoffatomen steht,
- Y: einen linearen oder verzweigten, aliphatischen oder cycloaliphatischen Rest mit 5 bis 13 Kohlenstoffatomen bedeutet und
- n: für eine ganze Zahl von 1 bis 20 steht.

In einer bevorzugten Ausführungsform der vorliegenden Erfindung besteht die Polyisocyanatkomponente A) der erfindungsgemäßen Beschichtungsmittel aus mindestens einem Silangruppen enthaltenden Thioallophanat der allgemeinen Formel (I).

Die Herstellung dieser Silangruppen enthaltender Thioallophanate erfolgt durch Umsetzung
a) mindestens eines monomeren Diisocyanates der allgemeinen Formel (II)

   **OCN Y NCO** (II),

   in welcher Y die oben genannte Bedeutung hat, mit
b) Mercaptosilanen der allgemeinen Formel (III) 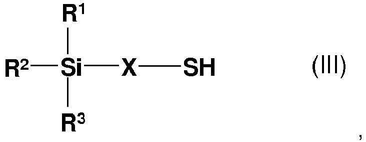 in welcher
   R¹, R², R³ und X die oben genannte Bedeutung haben,
   in einem Äquivalentverhältnis von Isocyanatgruppen zu Mercaptogruppen von 2 : 1 bis 40 : 1.

Als Ausgangsverbindungen a) zur Herstellung der Silangruppen enthaltenden Thioallophanate sind beliebige Diisocyanate mit aliphatisch und/oder cycloaliphatisch gebundenen Isocyanatgruppen geeignet, die nach beliebigen Verfahren, z. B. durch Phosgenierung oder auf phosgenfreiem Weg, beispielsweise durch Urethanspaltung, hergestellt werden können.

Geeignete Diisocyanate sind beispielsweise solche der allgemeinen Formel (II)

**OCN-Y-NCO** (II),

in welcher Y für einen linearen oder verzweigten, aliphatischen oder cycloaliphatischen Rest mit 5 bis 13 Kohlenstoffatomen steht, wie z. B. 1,5-Diisocyanatopentan (PDI), 1,6-Diisocyanatohexan (HDI), 1,5-Diisocyanato-2,2-dimethylpentan, 2,2,4- bzw. 2,4,4-Trimethyl-1,6-diisocyanatohexan, 1,8-Diisocyanatooctan, 1,9-Diisocyanatononan, 1,10-Diisocyanatodecan, 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethylcyclohexan (Isophorondiisocyanat; IPDI), 1-Isocyanato-1-methyl-4(3)-isocyanatomethylcyclohexan, 2,4'- und 4,4'-Diisocyanatodicyclohexylmethan (H₁₂-MDI), 1,3- und 1,4-Bis(isocyanatomethyl)cyclohexan, 4,4'-Diisocyanato-1,1'-bi(cyclohexyl), 1,8-Diisocyanato-p-menthan, 1,3-Diisocyanatoadamantan, 1,3-Dimethyl-5,7-diisocyanatoadamantan, sowie beliebige Gemische solcher Diisocyanate.

Weitere ebenfalls geeignete Diisocyanate finden sich darüberhinaus beispielsweise in Justus Liebigs Annalen der Chemie Band 562 (1949) S. 75 - 136.

Besonders bevorzugte Ausgangskomponenten a) für das erfindungsgemäße Verfahren sind 1,5-Diisocyanaotpentan, 1,6-Diisocyanatohexan, 1-Isocyanato-3,3,5-trimethyl-5-isocyanatomethylcyclohexan, 2,4'- und/oder 4,4'-Diisocyanatodicyclohexylmethan oder beliebige Gemische dieser Diisocyanate.

Ausgangskomponenten b) zur Herstellung der Silangruppen enthaltenden Thioallophanate sind beliebige Mercaptosilane der allgemeinen Formel (III) 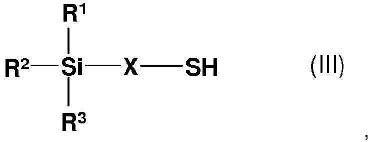 in welcher
- R¹, R² und R³: für gleiche oder verschiedene Reste stehen und jeweils einen gesättigten, linearen oder verzweigten, aliphatischen oder cycloaliphatischen Rest mit bis zu 6 Kohlenstoffatomen bedeuten, der gegebenenfalls bis zu 3 Sauerstoffatome enthalten kann, und
- X: für einen linearen oder verzweigten organischen Alkylenrest mit 2 bis 10 Kohlenstoffatomen steht.

Geeignete Mercaptosilane b) sind beispielsweise 2-Mercaptoethyltrimethylsilan, 2-Mercaptoethylmethyldimethoxysilan, 2-Mercaptoethyltrimethoxysilan, 2-Mercaptoethyltriethoxysilan, 3-Mercaptopropylmethyldimethoxysilan, 3-Mercaptopropyldimethylmethoxysilan, 3-Mercaptopropyltrimethoxysilan, 3-Mercaptopropylmethyldiethoxysilan, 3-Mercaptopropyltriethoxysilan, 3-Mercaptopropylethyldimethoxysilan, 3-Mercaptopropylethyldiethoxysilan und/oder 4-Mercaptobutyltrimethoxysilan.

Bevorzugte Mercaptosilane b) sind solche der allgemeinen Formel (III), in welcher
- R¹, R² und R³: jeweils Alkylreste mit bis zu 6 Kohlenstoffatomen und/oder Alkoxyreste, die bis zu 3 Sauerstoffatomen enthalten, bedeuten, mit der Maßgabe, daß mindestens einer der Reste R¹, R² und R³ für einen solchen Alkoxyrest steht, und
- X: für einen Propylenrest (-CH₂-CH₂-CH₂-) steht.

Besonders bevorzugte Mercaptosilane b) sind solche der allgemeinen Formel (III), in welcher
- R¹, R² und R³: für gleiche oder verschiedene Reste stehen und jeweils Methyl, Methoxy oder Ethoxy bedeuten, mit der Maßgabe, daß mindestens einer der Reste R¹, R² und R³ für einen Methoxy- oder Ethoxyrest steht, und
- X: für einen Propylenrest (-CH₂-CH₂-CH₂-) steht.

Zur Herstellung der Silangruppen enthaltenden Thioallophanate werden die Diisocyanate a) mit den Mercaptosilanen b) bei Temperaturen von 20 bis 200 °C, vorzugsweise 40 bis 160 °C, unter Einhaltung eines Äquivalentverhältnis von Isocyanatgruppen zu Mercaptogruppen von 2 : 1 bis 40 : 1, vorzugsweise von 4 : 1 bis 30 : 1, besonders bevorzugt 6 : 1 bis 20 : 1, zu Thioallophanaten umgesetzt.

Die Umsetzung kann unkatalysiert als thermisch induzierte Allophanatisierung durchgeführt werden. Bevorzugt kommen zur Beschleunigung der Allophanatisierungsreaktion aber geeignete Katalysatoren zum Einsatz. Hierbei handelt es sich um die üblichen bekannten Allophanatisierungskatalysatoren, beispielsweise um Metallcarboxylate, Metallchelate oder tertiär Amine der in der GB-A0 994 890 beschriebenen Art, um Alkylierungsmittel der in der US-A3 769 318 beschriebenen Art oder um starke Säuren, wie sie in der EP-A0 000 194 beispielhaft beschrieben sind.

Geeignete Allophanatisierungskatalysatoren sind insbesondere Zinkverbindungen, wie z. B. Zink-(II)-stearat, Zink-(II)-n-octanoat, Zink-(II)-2-ethyl-1-hexanoat, Zink-(II)-naphthenat oder Zink-(II)-acetylacetonat, Zinnverbindungen, wie z. B. Zinn-(II)-n-octanoat, Zinn-(II)-2-ethyl-1-hexanoat, Zinn-(II)-Iaurat, Dibutylzinnoxid, Dibutylzinndichlorid, Dibutylzinndiacetat, Dibutylzinndilaurat, Dibutylzinndimaleat oder Dioctylzinndiacetat, Zirconiumverbindungen, wie z. B. Zirconium-(IV)-2-ethyl-1-hexanoat, Zirconium-(IV)-neodecanoat, Zirconium-(IV)-naphthenat oder Zirconium-(IV)-acetylacetonat, Aluminium-tri(ethylacetoacetat), Eisen-(III)-chlorid, Kaliumoctoat, Mangan- Cobalt- oder Nickelverbindungen sowie starke Säuren, wie z. B. Trifluoressigsäure, Schwefelsäure, Chlorwasserstoff, Bromwasserstoff, Phosphorsäure oder Perchlorsäure, oder beliebige Gemische dieser Katalysatoren.

Geeignete, wenngleich weniger bevorzugte Katalysatoren zur Herstellung der Silangruppen enthaltenden Thioallophanate sind auch solche Verbindungen, die neben der Allophanatisierungsreaktion auch die Trimerisierung von Isocyanatgruppen unter Bildung von Isocyanuratstrukturen katalysieren. Solche Katalysatoren sind beispielsweise in der EP-A0 649 866 Seite 4, Zeile 7 bis Seite 5, Zeile 15 beschrieben.

Bevorzugte Katalysatoren zur Herstellung der Silangruppen enthaltenden Thioallophanate sind Zink- und/oder Zirconiumverbindungen der obengenannten Art. Ganz besonders bevorzugt ist die Verwendung Zink-(II)-n-octanoat, Zink-(II)-2-ethyl-1-hexanoat und/oder Zink-(II)-stearat, Zirconium-(IV)-n-octanoat, Zirconium-(IV)-2-ethyl-1-hexanoat und/oder Zirconium-(IV)-neodecanoat.

Diese Katalysatoren kommen beim der Herstellung der Silangruppen enthaltenden Thioallophanate, falls überhaupt, in einer Menge von 0,001 bis 5 Gew.-%, vorzugsweise 0,005 bis 1 Gew.-%, bezogen auf das Gesamtgewicht der Reaktionspartner a) und b) zum Einsatz und können sowohl vor Reaktionsbeginn als auch zu jedem Zeitpunkt der Reaktion zugesetzt werden.

Die Herstellung der Silangruppen enthaltenden Thioallophanate wird vorzugsweise lösungsmittelfrei durchgeführt. Gegebenenfalls können aber auch geeignete, gegenüber den reaktiven Gruppen der Ausgangskomponenten inerte Lösungsmittel mitverwendet werden. Geeignete Lösungsmittel sind beispielsweise die an sich bekannten üblichen Lacklösungsmittel, wie z. B. Ethylacetat, Butylacetat, Ethylenglykolmonomethyl- oder -ethyletheracetat, 1-Methoxypropyl-2-acetat (MPA), 3-Methoxy-n-butylacetat, Aceton, 2-Butanon, 4-Methyl-2-pentanon, Cyclohexanon, Toluol, Xylol, Chlorbenzol, Testbenzin, höher substituierte Aromaten, wie sie beispielsweise unter den Bezeichnungen Solventnaphtha, Solvesso®, Isopar®, Nappar®, Varsol® (ExxonMobil Chemical Central Europe, Köln, DE) und Shellsol® (Shell Deutschland Oil GmbH, Hamburg, DE) im Handel sind, aber auch Lösungsmittel wie Propylenglykoldiacetat, Diethylenglykoldimethylether, Dipropylenglykoldimethylether, Diethylenglykolethyl- und -butyletheracetat, N-Methylpyrrolidon und N-Methylcaprolactam, oder beliebige Gemische solcher Lösungsmittel. Bevorzugt enthalten diese Lösungsmittel oder Lösungsmittelgemische einen Wassergehalt von höchstens 1,0 Gew.-%, besonders bevorzugt höchstens 0,5 Gew.-% bezogen auf eingesetztes Lösungsmittel auf.

In einer möglichen Ausführungsform wird bei der Herstellung der Silangruppen enthaltenden Thioallophanate das Ausgangsdiisocyanat a) bzw. eine Mischung verschiedener Ausgangsdiisocyanate a) gegebenenfalls unter Inertgas, wie beispielsweise Stickstoff, und gegebenenfalls in Gegenwart eines geeigneten Lösungsmittels der genannten Art bei einer Temperatur zwischen 20 und 100°C vorgelegt. Anschließend wird das Mercaptosilan b) bzw. eine Mischung verschiedener Mercaptosilane in der oben angegebenen Menge zugegeben und die Reaktionstemperatur für die Thiourethanisierung gegebenenfalls durch eine geeignete Maßnahme (Heizen oder Kühlen) auf eine Temperatur von 30 bis 120°C, vorzugsweise von 50 bis 100°C eingestellt. Im Anschluß an die Thiour ethanisierungsreaktion, d. h. wenn der einem vollständigen Umsatz von Isocyanat- und Mercaptogruppen theoretisch entsprechende NCO-Gehalt erreicht ist, kann die Thioallophanatisierung beispielsweise ohne Zusatz eines Katalysators durch Erhitzen des Reaktionsgemisches auf eine Temperatur von 120 bis 200°C gestartet werden. Vorzugsweise kommen zur Beschleunigung der Thioallophanatisierungsreaktion jedoch geeignete Katalysatoren der obengenannten Art zum Einsatz, wobei in Abhängigkeit von der Art und Menge des eingesetzten Katalysators Temperaturen im Bereich von 60 bis 140°C, vorzugsweise 70 bis 120°C, zur durchführung der Reaktion ausreichend sind.

In einer anderen möglichen Ausführungsform des Verfahrens zur Herstellung der Silangruppen enthaltenden Thioallophanate wird der gegebenenfalls mitzuverwendenden Katalysator entweder der Diisocyanatkomponente a) und/oder der Silankomponente b) bereits vor Beginn der eigentlichen Umsetzung zugemischt. In diesem Fall reagieren die sich intermediär bildenden Thiourethangruppen spontan weiter zur gewünschten Thioallophanatstruktur. Bei dieser Art der einstufigen Reaktionsführung werden die gegebenenfalls den Katalysator enthaltenden Ausgangsdiisocyanate a) gegebenenfalls unter Inertgas, wie beispielsweise Stickstoff, und gegebenenfalls in Gegenwart eines geeigneten Lösungsmittels der genannten Art, in der Regel bei für die Thioallophanatisierung optimalen Temperaturen im Bereich von 60 bis 140°C, vorzugsweise 70 bis 120°C, vorgelegt und mit der gegebenenfalls den Katalysator enthaltenden Silankomponente b) zur Reaktion gebracht.

Es ist aber auch möglich, den Katalysator dem Reaktionsgemisch zu einem beliebigen Zeitpunkt während der Thiourethanisierungsreaktion zuzusetzen. Bei dieser Ausführungsform des Verfahrens zur Herstellung der Silangruppen enthaltenden Thioallophanate wird für die vor der Katalysatorzugabe ablaufende reine Thiourethanisierungsreaktion in der Regel eine Temperatur im Bereich von 30 bis 120°C, vorzugsweis e von 50 bis 100°C, eingestellt. Nach Zugabe eines geeigneten Katalysators wird die Thioallophantisierungreaktion schließlich bei Temperaturen von 60 bis 140°C, vorzugsweise von 70 bis 120°C, durchgeführt.

Bei der Herstellung der Silangruppen enthaltenden Thioallophanate kann der Verlauf der Umsetzung durch z. B. titrimetrische Bestimmung des NCO-Gehaltes verfolgt werden. Nach Erreichen des angestrebten NCO-Gehaltes, vorzugsweise wenn der Thioallophanatisierungsgrad (d. h. der aus dem NCO-Gehalt errechenbare prozentuale Anteil der zu Thioallophanatgruppen umgesetzten, aus den Mercaptogruppen der Komponente b) sich intermediär bildenden Thiourethangruppen) des Reaktionsgemisches mindestens 70 %, besonders bevorzugt mindestens 90 % beträgt, ganz besonders bevorzugt nach vollständiger Thioallophanatisierung, wird die Reaktion abgebrochen. Dies kann bei rein thermischer Reaktionsführung beispielsweise durch Abkühlen des Reaktionsgemisches auf Raumtemperatur erfolgen. Bei der bevorzugten Mitverwendung eines Thioallophanatisierungskatalysators der genannten Art wird die Umsetzung im allgemeinen aber durch Zugabe geeigneter Katalysatorgifte, beispielsweise Säurechloride wie Benzoylchlorid oder Isophthaloyldichlorid, abgestoppt.

Vorzugsweise wird das Reaktionsgemisch anschließend durch Dünnschichtdestillation im Hochvakuum, beispielsweise bei einem Druck von unter 1,0 mbar, vorzugsweise unter 0,5 mbar, besonders bevorzugt unter 0,2 mbar, unter möglichst schonenden Bedingungen, beispielsweise bei einer Temperatur von 100 bis 200 °C , vorzugsweise von 120 bis 180 °C, von flüchtigen Bestandteilen (überschüssigen monomeren Diisocyanaten, gegebenenfalls mitverwendeten Lösungsmitteln und, bei Verzicht auf den Einsatz eines Katalysatorgiftes, gegebenenfalls aktivem Katalysator) befreit.

Die anfallenden Destillate, die neben den nicht umgesetzten monomeren Ausgangsdiisocyanaten, gegebenenfalls mitverwendete Lösungsmittel bei Verzicht auf den Einsatz eines Katalysatorgiftes gegebenenfalls aktiven Katalysator enthalten, können problemlos zur erneuten Oligomerisierung verwendet werden.

In einer weiteren Ausführungsform des Verfahrens zur Herstellung der Silangruppen enthaltenden Thioallophanate werden die genannten flüchtigen Bestandteile durch Extraktion mit geeigneten gegenüber Isocyanatgruppen inerten Lösungsmitteln, beispielsweise aliphatischen oder cycloaliphatischen Kohlenwasserstoffen wie Pentan, Hexan, Heptan, Cyclopentan oder Cyclohexan vom Oligomerisierungsprodukt abgetrennt.

Unabhängig von der Art der Aufarbeitung erhält man als Produkte klare, praktisch farblose Thioallophanatpolyisocyanate, die in der Regel Farbzahlen von unter 120 APHA, vorzugsweise von unter 80 APHA, besonders bevorzugt von unter 60 APHA, und einen NCO-Gehalt von 2,0 bis 18,0 Gew.-%, vorzugsweise 7,0 bis 17,0 Gew.-%, besonders bevorzugt 10,0 bis 16,0 Gew.-%, aufweisen. Dabei beträgt die mittlere NCO-Funktionalität in Abhängigkeit vom Umsatzgrad und verwendetem Thioallophanatisierungskatalysator in der Regel von 1,8 bis 3,0, vorzugsweise von 1,8 bis 2,5, besonders bevorzugt von 1,9 bis 2,1,

Neben den Thioallophanatpolyisocyanaten kann die Polyisocyanatkomponente A) gegebenenfalls noch weitere Polyisocyanate mit aliphatisch, cycloaliphatisch, araliphatisch und/oder aromatisch gebundenen Isocyanatgruppen enthalten, die gegebenenfalls auch bereits Silangruppen aufweisen können. Bei diesen weiteren Polyisocyanaten handelt es sich insbesondere um die bekannten Lackpolyisocyanate mit Uretdion-, Isocyanurat-, Iminooxadiazindion-, Urethan-, Allophanat-, Biuret- und/oder Oxadiazintrionstruktur, wie sie beispielhaft in Laas et al., J. Prakt. Chem. 336, 1994, 185-200*,* der DE-A1 670 666, DE-A3 700 209, DE-A3 900 053, EP-A0 330 966, EP-A0 336 205, EP-A0 339 396 und EP-A 0 798 299 beschrieben sind, sowie um Umsetzungsprodukte solcher Polyisocyanate mit Silangruppen enthaltenden, gegenüber Isocyanatgruppen reaktiven Verbindungen, wie sie z. B. in EP-A1 273 640, WO 2014/086530 oder WO 2009/156148 beschrieben sind.

Bevorzugte weitere Polyisocyanate, die neben den Silangruppen enthaltenden Thioallophanaten gegebenenfalls in der Polyisocyanatkomponente A) enthalten sein können, sind solche der genannten Art mit ausschließlich aliphatisch und/oder cycloaliphatisch gebundenen Isocyanatgruppen, insbesondere solche auf Basis von PDI, HDI und/oder IPDI.

Falls überhaupt kommen in den erfindungsgemäßen Beschichtungsmitteln diese weiteren Polyisocyanate in der Polyisocyanatkomponente A) in Mengen von bis zu 70 Gew.-%, vorzugsweise bis zu 60 Gew.-%, besonders bevorzugt bis zu 50 Gew.-%, bezogen auf die Geamtmenge der aus mindestens einem Silangruppen enthaltenden Thioallophanat und gegebenenfalls weiteren Polyisocyanaten bestehenden Polyisocyanatkomponente A) zum Einsatz.

In den im Falle der Mitverwendung weiterer Polyisocyanate der genannten Art als Polyisocyanatkomponenten A) vorliegenden Abmischungen übernehmen die Silangruppen enthaltenden Thioallophanatpolyisocyanate aufgrund ihrer sehr niedrigen Viskosität die Rolle eines Reaktivverdünners für die in der Regel höherviskosen Lackpolyisocyanate. Solche Abmischungen von Silangruppen enthaltenden Thioallophanatpolyisocyanaten mit weiteren Polyisocyanaten zeigen gegenüber den bisher bekannten silanfunktionellen Polyisocyanaten des Standes der Technik bei vergleichbaren Silangehalten den Vorteil erheblich höherer Isocyanatgehalte und -funktionalitäten bei gleichzeitig deutlich niedrigeren Viskositäten.

Die erfindungsgemäßen Beschichtungsmittel enthalten als Bindemittelkomponente B) beliebige Polyole, die mindestens zwei Hydroxylgruppen tragen. Geeignete Bindemittelkomponenten B) sind beispielsweise die üblichen aus der Polyurethanchemie bekannten Polyhydroxylverbindungen, wie z. B. Polyesterpolyole, Polyetherpolyole, Polycarbonatpolyole und/oder Polyacrylatpolyole, oder beliebige Abmischungen solcher Polyole.

Geeignete Polyesterpolyole B) sind beispielsweise solche eines mittleren, aus Funktionalität und Hydroxylzahl berechenbaren Molekulargewichtes von 200 bis 3000, vorzugsweise von 250 bis 2500, mit einem Hydroxylgruppen-Gehalt von 1 bis 21 Gew.-%, vorzugsweise 2 bis 18 Gew.-%, wie sie sich in an sich bekannter Art und Weise durch Umsetzung von mehrwertigen Alkoholen mit unterschüssigen Mengen an mehrwertigen Carbonsäuren, entsprechenden Car-bonsäureanhydriden, entsprechenden Polycarbonsäureestern von niederen Alkoholen oder Lactonen herstellen lassen.

Zur Herstellung dieser Polyesterpolyole geeignete mehrwertige Alkohole sind insbesondere solche des Molekulargewichtsbereichs 62 bis 400 wie z. B. 1,2-Ethandiol, 1,2- und 1,3-Propandiol, die isomeren Butandiole, Pentandiole, Hexandiole, Heptandiole und Octandiole, 1,2- und 1,4-Cyclohexandiol, 1,4-Cyclohexandimethanol, 4,4'-(1-Methylethyliden)-biscyclo-hexanol, 1,2,3-Propantriol, 1,1,1-Trimethylolethan, 1,2,6-Hexantriol, 1,1,1-Trimethylolpropan, 2,2-Bis(hydroxymethyl)-1,3-propandiol oder 1,3,5-Tris(2-hydroxyethyl)-isocyanurat.

Die zur Herstellung der Polyesterpolyole B) verwendeten Säuren oder Säurederivate können aliphatischer, cycloaliphatischer und/oder heteroaromatischer Natur sein und gegebenenfalls, z. B. durch Halogenatome, substituiert und/oder ungesättigt sein. Beispiele geeigneter Säuren sind beispielsweise mehrwertige Carbonsäuren des Molekulargewichtsbereichs 118 bis 300 oder deren Derivate wie beispielsweise Bernsteinsäure, Adipinsäure, Sebacinsäure, Phthalsäure, Isophthalsäure, Trimellitsäure, Phthalsäureanhydrid, Tetrahydrophthalsäure, Maleinsäure, Maleinsäureanhydrid, dimere und trimere Fettsäuren, Terephthalsäuredimethylester und Terephthalsäure-bis-glykolester.

Zur Herstellung der Polyesterpolyole B) können auch beliebige Gemische dieser beispielhaft genannten Ausgangsverbindungen eingesetzt werden.

Geeignete Polyesterpolyole B) sind auch solche, wie sie sich in an sich bekannter Weise aus Lactonen und einfachen mehrwertigen Alkoholen, wie z. B. den oben beispielhaft genannten, als Startermolekülen unter Ringöffnung herstellen lassen. Geeignete Lactone zur Herstellung dieser Polyesterpolyole sind beispielsweise β-Propiolacton, γ-Butyroiacton, γ-und δ-Valerolacton, ε-Caprolacton, 3,5,5- und 3,3,5-Trimethylcaprolacton oder beliebige Gemische solcher Lactone.

Die Herstellung dieser Lactonpolyester erfolgt im allgemeinen in Gegenwart von Katalysatoren wie beispielsweise Lewis- oder Brönstedt-Säuren, organischen Zinn- oder Titanverbindungen bei Temperaturen von 20 bis 200°C, vorzugswe ise 50 bis 160°C.

Geeignete Polyetherpolyole B) sind beispielsweise solche eines mittleren, aus Funktionalität und Hydroxylzahl berechenbaren Molekulargewichtes von 200 bis 6000, vorzugsweise 250 bis 4000, mit einem Hydroxylgruppen-Gehalt von 0,6 bis 34 Gew.-%, vorzugsweise 1 bis 27 Gew.-%, wie sie in an sich bekannter Weise durch Alkoxylierung geeigneter Startermoleküle zugänglich sind. Zur Herstellung dieser Polyetherpolyole können beliebige mehrwertige Alkohole, beispielsweise solche des Molekulargewichtsbereichs 62 bis 400, wie sie oben bei der Herstellung von Polyesterpolyolen beschrieben werden, als Startermoleküle eingesetzt werden.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Geeignete Polyacrylatpoylole B) sind beispielsweise solche eines mittleren aus Funktionalität und Hydroxylzahl berechenbaren oder durch Gelpermeationschromatografie (GPC) bestimmbaren Molekulargewichtes von 800 bis 50.000, vorzugsweise von 1000 bis 20.000, mit einem Hydroxylgruppengehalt von 0,1 bis 12 Gew.-%, vorzugsweise 1 bis 10, wie sie sich in an sich bekannter Weise durch Copolymerisation Hydroxylgruppen aufweisender olefinisch ungesättigter Monomerer mit hydroxylgruppenfreien olefinischen Monomeren herstellen lassen.

Beispiele für geeignete Monomere zur Herstellung der Polyacrylatpolyole B) sind Vinyl- bzw. Vinylidenmonomere wie z.B. Styrol, α-Methylstyrol, o- bzw. p-Chlorstyrol, o-, m- oder p-Methylstyrol, p-tert.-Butylstyrol, Acrylsäure, Acrylnitril, Methacrylnitril, Acryl- und Methacrylsäureester von Alkoholen mit bis zu 18 Kohlenstoffatomen, wie z. B. Methylacrylat, Ethylacrylat, n-Propylacrylat, Isopropylacrylat, n-Butylacrylat, Isobutylacrylat, tert-Butylacrylat, Amylacrylat, Hexylacrylat, 2-Ethylhexylacrylat, Isooctylacrylat, 3,3,5-Trimethylhexylacrylat, Stearylacrylat, Laurylacrylat, Cyclopentylacrylat, Cyclohexylacrylat, 4-tert.-Butylcyclohexyl-acrylat, Isobornylacrylat, Methylmethacrylat, Ethylmethacrylat, n-Propylmethacrylat, Isopropylmethacrylat, Butylmethacrylat, Isobutylmethacrylat, tert-Butylmethacrylat, Amylmethacrylat, Hexylmethacrylat, 2-Ethylhexylmethacrylat, Isooctylmethacrylat, 3,3,5-Trimethylhexylmethacrylat, Stearylmethacrylat, Laurylmethacrylat, Cyclopentylmethacrylat, Cyclohexylmethacrylat, 4-tert.-Butycyclohexylmethacrylat, Norbornylmethacrylat oder Isobornylmethacrylat, Diester der Fumarsäure, Itaconsäure oder Maleinsäure mit 4 bis 8 Kohlenstoffatome aufweisenden Alkoholen, Acrylsäureamid, Methacrylsäureamid, Vinylester von Alkanmonocarbonsäuren mit 2 bis 5 Kohlenstoffatomen, wie z. B. Vinylacetat oder Vinylpropionat, Hydroxyalkylester der Acrylsäure oder Methacrylsäure mit 2 bis 5 Kohlenstoffatomen im Hydroxyalkylrest, wie z. B. 2-Hydroxyethyl-, 2-Hydroxypropyl-, 3-Hydroxypropyl-, 3-Hydroxybutyl-, 4-Hydroxybutyl-, Trimethylolpropanmono- oder Pentaerythritmonoacrylat oder -methacrylat, sowie beliebige Gemische solcher beispielhaft genannter Monomere.

Bevorzugte Bindemittelkomponenten B) sind Polyesterpolyole, Polycarbonatpolyole und/- oder Polyacrylatpolyole der genannten Art. Besonders bevorzugte Bindemittelkomponenten B) sind Polyacrylatpolyole der genannten Art, die gegebenenfalls im Gemisch mit Polyesterpolyolen und/oder Polycarbonatpolyolen der genannten Art eingesetzt werden können. Ganz besonders bevorzugt enthält die Bindemittelkomponenten B) ausschließlich Polyacrylatpolyole der genannten Art.

Die erfindungsgemäßen Beschichtungsmittel enthalten mindestens einen Katalysator C) zur Vernetzung von Silangruppen. Hierbei handelt es sich um beliebige Verbindungen, die in der Lage sind, die Hydrolyse und Kondensation von Alkoxysilangruppen oder bevorzugt die thermisch induzierte Silankondensation zu beschleunigen.

Geeignete Katalysatoren C) sind beispielsweise Säuren, wie z. B. organische Carbonsäuren, Schwefelsäure, p-Toluolsulfonsäure, Trifluormethansulfonsäure, Dodecylbenzolsulfonsäure, Essigsäure, Trifluoressigsäure, Phosphorsäuremonoester und Phosphorsäurediester, wie z. B. Dibutylphosphat, Phosphorsäure-2-ethylhexylester, Phosphorsäurephenylester und Phosphorsäure-bis(2-ethylhexyl)ester, sowie Phosphonsäurediester und Diphosphonsäurediester, wie sie z. B. in der WO 2007/033786 beschrieben sind.

Als Katalysatoren C) ebenfalls geeignet sind auch Basen, wie z. B. die N-substituierten Amidine 1,5-Diazabicyclo[4.3.0]non-5-en (DBN) und 1,5-Diazabicyclo[5.4.0]undec-7-en (DBU), oder auch Metallsalze und Metallchelate, wie z. B. Tetraisopropyltitanat, Tetrabutyltitanat, Titan(IV)acetylacetonat, Aluminium-tri-sec-butylat, Aluminiumacetylacetonat, Aluminiumtriflat, Zinntriflat oder Zirkonethylacetoacetat, wie sie z. B. in WO 2006/042658 beschrieben sind.

Geeignete Katalysatoren C) sind auch Phosphorsäure- und Phosphonsäureester der oben genannten Art, die in mit Aminen, vorzugsweise mit tertiären Aminen blockierter Form vorliegen. Besonders bevorzugte Katalysatoren dieses Typs sind solche, die im Temperaturbereich der Aushärtung von Automobildeck- und -klarlacken, beispielsweise im Bereich von 100 bis 150°C unter Abspaltung des Blockierungsamins die sauren Phosphorsäure- und Phosphonsäureester wieder freisetzen, die die eigentlich wirksame Katalysatoren darstellen. Geeignete aminblockierte Phosphorsäurekatalysatoren C) sind beispielsweise in WO 2008/074489 und WO 2009/077180 beschrieben.

Ebenfalls geeignete Katalysatoren C) sind organische Sulfonsäuren der oben genannten Art, die in blockierter Form, beispielsweise in amin-neutralisierter Form oder als Addukt an Epoxiden, wie in der DE 2 356 768 B1 beschrieben, eingesetzt werden und oberhalb von 100°C die katalytisch aktiven Sulfonsäuren wieder f reisetzen.

Weitere zur Vernetzung von Silangruppen geeignete Katalysatoren C) sind auch Tetraalkylammoniumcarboxylate, wie z. B. Tetramethylammoniumformiat, Tetramethylammoniumacetat, Tetramethylammoniumpropionat, Tetramethylammoniumbutyrat, Tetramethylammoniumbenzoat, Tetraethylammoniumformiat, Tetraethylammoniumacetat, Tetraethylammoniumpropionat, Tetraethylammoniumbutyrat, Tetraethylammoniumbenzoat, Tetrapropylammoniumformiat, Tetrapropylammoniumacetat, Tetrapropylammonium-propionat, Tetrapropylammoniumbutyrat, Tetrapropylammonium-benzoat, Tetrabutylammoniumformiat, Tetrabutylammoniumacetat, Tetrabutylammoniumpropionat, Tetrabutylammoniumbutyrat und/oder Tetrabutylammoniumbenzoat.

Zur Vernetzung von Silangruppen geeignete Katalysatoren C) sind auch quaternäre Ammonium- und Phosphoniumpolyfluoride, wie sie z. B. aus der EP-A0 798 299, EP-A0 896 009 und EP-A0 962 455 als Trimerisierungskatalysatoren für Isocyanatgruppen bekannt sind.

Geeignete Katalysatoren C) sind schließlich auch Zink-Amidin-Komplexe, die nach dem Verfahren der WO 2014/016019 durch Umsetzung eines oder mehrerer Zink(II)biscarb-oxylate mit Amidinen hergestellt werden können.

Bevorzugte Katalysatoren C) zur Vernetzung von Silangruppen sind saure Phosphorsäureester, Phosphonsäureester und Sulfonsäuren der genannten Art, die gegebenenfalls in mit Aminen blockierter Form vorliegen können, sowie Tetraalkylammoniumcarboxylate der genannten Art. Besonders bevorzugte Katalysatoren C) sind mit Aminen blockierte Phosphorsäureester und Sulfonsäuren sowie die genannten Tetraalkylammoniumcarboxylate. Ganz besonders bevorzugte Katalysatoren C) sind mit Aminen blockierte Phosphorsäurephenylester und Phosphorsäure-bis(2-ethylhexyl)ester, Tetraethylammoniumbenzoat und Tetrabutylammoniumbenzoat.

Neben den vorstehend beispielhaft genannten Katalysatoren C) zur Silanvernetzung können die erfindungsgemäßen Beschichtungsmittel gegebenenfalls zusätzlich auch in der Isocyanatchemie übliche Urethanisierungskatalysatoren enthalten, die die Umsetzung der Isocyanantgruppen der Komponente A) mit den Hydroxylgruppen der Bindemittelkomponente B) beschleunigen, wie z. B. tert. Amine wie Triethylamin, Pyridin, Methylpyridin, Benzyldimethylamin, N,N-Endoethylenpiperazin, N-Methylpiperidin, Pentamethyldiethylentriamin, N,N-Dimethylaminocyclohexan, N,N'-Dimethylpiperazin oder Metallsalze wie Eisen(III)-chlorid, Zinkchlorid, Zink-2-ethylcaproat, Zinn(II)-octanoat, Zinn(II)-ethylcaproat, Dibutylzinn(IV)-dilaurat, Zirkonium(IV)-isopropylat, Zirkonium(IV)-n-butylat, Zirkonium(IV)-2-ethylhexanoat, Zirkonyloctanoat, Wismut(III)-2-ethylhexanoat, Wismut(III)-octoat oder Molybdänglykolat.

Die Katalysatoren C) kommen in den erfindungsgemäßen Beschichtungsmitteln als Einzelsubstanz oder in Form beliebiger Gemische untereinander in Mengen von 0,005 Gew.-% bis zu 5 Gew.-%, vorzugsweise von 0,005 Gew.-% bis zu 2 Gew.-%, besonders bevorzugt von 0,005 Gew.-% bis zu 1 Gew.-%, berechnet als Summe aller eingesetzten Katalysatoren C) und bezogen auf die Gesamtmenge aus Polyisocyanatkomponente A) und hydroxyfunktioneller Bindemittelkomponente B) zum Einsatz.

Die erfindungsgemäßen Beschichtungsmittel können gegebenenfalls weitere Hilfs- und Zusatzstoffe D) enthalten. Hierbei handelt es sich insbesondere um die dem Fachmann aus der Lacktechnologie bekannten Hilfs- und Zusatzstoffe, wie z. B. Lösungsmittel, UV-Stabilisatoren, Antioxidantien, Wasserfänger, Verlaufsmittel, Rheologieadditive, Slipadditive, Entschäumer, Füllstoffe und/oder Pigmente.

Zur Verringerung der Verarbeitungsviskosität können die erfindungsgemäßen Beschichtungsmittel beispielsweise mit üblichen organischen Lösungsmitteln D₁) verdünnt werden. Hierfür geeignete Lösungsmittel sind beispielsweise die bereits vorstehend bei der Herstellung der Silangruppen enthaltenden Thioallophanate als gegebenenfalls mitzuverwendende Lösungsmittel beschriebenen Lacklösungsmittel, die sich gegenüber den reaktiven Gruppen der Beschichtungsmittelbestandteile chemisch inert verhalten und einen Wassergehalt von höchstens 1,0 Gew.-%, besonders bevorzugt höchstens 0,5 Gew.-% bezogen auf eingesetztes Lösungsmittel aufweisen.

Geeignete UV-Stabilisatoren D₂) können vorzugsweise ausgewählt werden aus der Gruppe, bestehend aus Piperidinderivaten, wie z.B. 4-Benzoyloxy-2,2,6,6-tetramethylpiperidin, 4-Benzoyloxy-1,2,2,6,6-pentamethylpiperidin, Bis-(2,2,6,6-tetra-methyl-4-piperidyl)-sebacat, Bis(1,2,2,6,6-pentamethyl-1-4-piperidinyl)-sebacat, Bis-(2,2,6,6-tetramethyl-4-piperidyl)-suberat, Bis-(2,2,6,6-tetramethyl-4-piperidyl)-dodecandioat; Benzophenonderivaten, wie z.B. 2,4-Dihydroxy-, 2-Hydroxy-4-methoxy-, 2-Hydroxy-4-octoxy-, 2-Hydroxy-4-dodecyloxy- oder 2,2'-Dihydroxy-4-dodecyloxy-benzophenon; Benztriazolderivaten, wie z.B. 2-(2H-Benzotriazol-2-yl)-4,6-di-tert-pentylphenol, 2-(2H-Benzotriazol-2-yl)-6-dodecyl-4-methylphenol, 2-(2H-Benzotriazol-2-yl)-4,6-bis(1-methyl-1-phenylethyl)phenol, 2-(5-Chlor-2H-benzotriazol-2-yl)-6-(1,1-dimethylethyl)-4-methylphenol, 2-(2H-benzotriazol-2-yl)-4-(1,1,3,3-tetramethylbutyl)-phenol, 2-(2H-Benzotriazol-2-yl)-6-(1-methyl-1-phenylethyl)-4-(1,1,3,3-tetramethylbutyl)-phenol, Isooctyl-3-(3-(2H-benzotriazol-2-yl)-5-(1,1-dimethylethyl)-4-hydroxyphenylpropionat), 2-(2H-Benzotriazol-2-yl)-4,6-bis(1,1-dimethylethyl)phenol, 2-(2H-Benzotriazol-2-yl)-4,6-bis(1-methyl-1-phenylethyl)phenol, 2-(5-Chlor-2H-benzotriazol-2-yl)-4,6-bis(1,1-dimethylethyl)-phenol; Oxalaniliden, wie z.B. 2-Ethyl-2'-ethoxy- oder 4-Methyl-4'-methoxyoxalanilid; Salicylsäureestern, wie z.B. Salicylsäurephenylester, Salicylsäure-4-tert-butylphenylester, Salicylsäure-4-tert-octylphenylester; Zimtsäureesterderivaten, wie z.B. α-Cyano-β-methyl-4-methoxyzimtsäuremethylester, α-Cyano-β-methyl-4-methoxyzimtsäurebutyl-ester, α-Cyano-β-phenylzimtsäureethylester, α-Cyano-β-phenylzimtsäureisooctylester; und Malonesterderivaten, wie z.B. 4-Methoxy-benzylidenmalonsäuredimethylester, 4-Methoxybenzylidenmalonsäurediethylester, 4-Butoxy-benzylidenmalonsäuredimethylester. Diese bevorzugten UV-Stabilisatoren können sowohl einzeln als auch in beliebigen Kombinationen untereinander zum Einsatz kommen.

Gegebenenfalls werden ein oder mehrere der beispielhaft genannten UV-Stabilisatoren D₂) dem erfindungsgemäßen Beschichtungsmittel vorzugsweise in Mengen von 0,001 bis 3,0 Gew.-%, besonders bevorzugt 0,01 bis 2 Gew.-%, berechnet als Gesamtmenge an eingesetzten UV-Stabilisatoren bezogen auf die Gesamtmenge aus Polyisocyanatkomponente A) und hydroxyfunktioneller Bindemittelkomponente B) zugesetzt.

Geeignete Antioxidantien D₃) sind vorzugsweise sterisch gehinderten Phenole, welche vorzugsweise ausgewählt werden können aus der Gruppe, bestehend aus 2,6-Di-tert-butyl-4-methylphenol (Ionol), Pentaerythrit-tetrakis(3-(3,5-di-tert-butyl-4-hydroxy-phenyl)-propionat), Octadecyl-3-(3,5-di-tert-butyl-4-hydroxyphenyl)-propionat, Triethylen-glykol-bis(3-tert-butyl-4-hydroxy-5-methylphenyl)propionat, 2,2'-Thio-bis(4-methyl-6-tert-butylphenol) und 2,2'-Thiodiethyl-bis[3-(3,5-di-tert-butyl-4-hydroxyphenyl)propionat]. Diese können bei Bedarf sowohl einzeln als auch in beliebigen Kombinationen untereinander eingesetzt werden.

Diese Antioxidantien D₃) werden vorzugsweise in Mengen von 0,01 bis 3,0 Gew.-%, besonders bevorzugt 0,02 bis 2,0 Gew.-%, berechnet als Gesamtmenge an eingesetzten Antioxidantien bezogen auf die Gesamtmenge aus Polyisocyanatkomponente A) und hydroxyfunktioneller Bindemittelkomponente B) eingesetzt.

Um eine vorzeitige Vernetzung der Silangruppen in den erfindungsgemäßen Beschichtungsmitteln zu unterbinden, kann der Zusatz von Wasserfängern D₄), beispielsweise Orthoameisenestern, wie z. B. Triethylorthoformiat, oder Vinylsilanen, wie z. B. Vinyltrimethoxysilan, vorteilhaft sein. Diese Wasserfänger kommen, falls überhaupt, in Mengen von 0,01 Gew.-% bis zu 5 Gew.-%, vorzugsweise von 0,01 Gew.-% bis zu 2 Gew.-%, bezogen auf die auf die Gesamtmenge aus Polyisocyanatkomponente A) und hydroxyfunktioneller Bindemittelkomponente B) zum Einsatz.

Zur Verbesserung der Substratbenetzung können die erfindungsgemäßen Beschichtungsmittel gegebenenfalls geeignete Verlaufsmittel D₅), beispielsweise organisch modifizierte Siloxane, wie z. B. Polyethermodifizierte Siloxane, Polyacrylate und/oder Fluortenside, enthalten. Diese Verlaufsmittel kommen, falls überhaupt, in Mengen von 0,01 Gew.-% bis zu 3 Gew.-%, vorzugsweise von 0,01 Gew.-% bis zu 2 Gew.-%, besonders bevorzugt von 0,05 bis 1,5 Gew.-%, bezogen auf die auf die Gesamtmenge aus Polyisocyanatkomponente A) und hydroxyfunktioneller Bindemittelkomponente B) zum Einsatz.

Die in den erfindungsgemäßen Beschichtungsmitteln ebenfalls als weitere Hilfs- und Zusatzstoffe D) gegebenenfalls enthaltenen Rheologieadditive, Slipadditive, Entschäumer, Füllstoffe und/oder Pigmente sind dem Fachmann bekannt und kommen falls überhaupt in der Lacktechnologie üblichen Mengen zum Einsatz. Eine ausführliche Übersicht über derartige geeignete Hilfs- und Zusatzstoffe findet sich beispielsweise in Bodo Müller, "Additive kompakt", Vincentz Network GmbH & Co KG (2009).

Zur Herstellung der erfindungsgemäßen Beschichtungsmittel werden die beschriebenen Komponenten A), B), C) und gegebenenfalls D) in beliebiger Reihenfolge nacheinander oder gemeinsam vorzugsweise mit Hilfe geeigneter Mischaggregate innig vermischt bis eine homogene Lösung vorliegt. Dabei kommen die Polyisocyanatkomponente A), die mindestens ein Silangruppen enthaltendes Thioallophanatpolyisocyanat enthält, und die hydroxyfunktionelle Bindemittelkomponente B) üblicherweise in solchen Mengen zum Einsatz, dass auf jede Isocyanatgruppe der Polyisocyanatkomponente A) 0,5 bis 3,0, vorzugsweise 0,6 bis 2,0, besonders bevorzugt 0,8 bis 1,6 Hydroxylgruppen der Bindemittelkomponente B) entfallen.

Die Katalysatorkomponente C) sowie die gegebenenfalls mitzuverwendenden weiteren Hilfs- und Zusatzstoffe D) können dabei gegebenenfalls bereits vor dem eigentlichen Vermischen der Reaktivkomponenten entweder der Polyisocyanatkomponente A) und/oder der Bindemittelkomponente B) zugesetzt werden, wobei die Katalysatorkomponente C) zur Vermeidung einer vorzeitigen Silankondensation besonders bevorzugt der Bindemittelkomponente B) zugesetzt wird.

Die Applikation der so erhaltenen erfindungsgemäßen Beschichtungsmittel, die Silangruppen enthaltende Thioallophanatpolyisocyanate als Vernetzungsmittel enthalten, kann nach an sich bekannten Methoden erfolgen, beispielsweise durch Spritzen, Streichen, Tauchen, Fluten oder mit Hilfe von Walzen oder Rakeln in einer oder mehrerer Schichten.

Als Untergründe kommen dabei beliebige Substrate in Betracht, wie z. B. Metall, Holz, Glas, Stein, keramische Materialien, Beton, harte und flexible Kunststoffe, Textilien, Leder und Papier, die vor der Beschichtung gegebenenfalls auch mit üblichen, bekannten Grundierungen, Füllerlackierungen, Basislackierungen und/oder Klarlackierungen versehen werden können.

Bevorzugt finden die erfindungsgemäßen Beschichtungsmittel in Einsatzgebieten Verwendung, in denen an eine Beschichtung hohe Anforderungen an die optische Qualität und Beständigkeit gegenüber mechanischer Verkratzung gestellt werden. Hierzu zählen insbesondere dekorative, schützende und/oder effektgebende, hoch kratzfeste Beschichtungen und Lackierungen von Kraftfahrzeugkarosserien, wie z. B. Motorrädern, Bussen, LKW oder PKW oder von Teilen hiervon. Ganz besonders eignen sich die erfindungsgemäßen Beschichtungsmittel zur Herstellung von Beschichtungen und Lackierungen, insbesondere von Klarlacken, in der Autoreparaturlackierung sowie in der Automobilserienlackierung (OEM).

Bevorzugt werden die erfindungsgemäßen Beschichtungsmittel dabei auch in der Klar- oder Decklackschicht von Mehrschichtaufbauten eingesetzt, insbesondere bei mehrstufigen Beschichtungsverfahren, bei denen auf ein gegebenenfalls vorbeschichtetes Substrat zunächst eine pigmentierte Basislackschicht und danach eine Schicht des erfindungsgemäßen Beschichtungsmittels aufgetragen werden.

Eine weitere Ausführungsform der vorliegenden Erfindung betrifft ein Verfahren zur Beschichtung von Oberflächen, enthalten die Schritte
a) Aufbringen des Beschichtungsmittels auf ein Substrat; und
b) Aushärten des Beschichtungsmittels.

Vorzugsweise werden die erfindungsgemäßen Beschichtungsmittel nach Methoden der Spritzapplikation verarbeitet, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air-Heißspritzen. Das Vermischen der Einzelbestandteile der erfindungsgemäßen Beschichtungsmittel, insbesondere der miteinander reaktiven Komponenten A) und B) erfolgt in diesen Spritzapplikationsanwendungen vorzugsweise erst unmittelbar vor der Verarbeitung und kann vorteilhafterweise in sogenannten 2-Komponentenanlagen erfolgen.

Die Aushärtung der erfindungsgemäßen Beschichtungsmittel kann unmittelbar im Anschluss an die Applikation oder nach Einhalten einer bestimmten Ablüftzeit erfolgen. Die Ablüftzeit dient beispielsweise zum Verlauf und zur Entgasung der Lackschichten oder zum Verdunsten flüchtiger Bestandteile, wie z. B. Lösungsmittel. Die erforderliche Dauer der Ablüftzeit kann beispielsweise durch Anwendung erhöhter Temperaturen und/oder durch eine reduzierte Luftfeuchte gezielt gesteuert werden.

Die endgültige Aushärtung der applizierten erfindungsgemäßen Beschichtungsmittel erfolgt schließlich nach üblichen und bekannten Methoden, wie z. B. Erhitzen in einem Umluftofen, Bestrahlen mit IR-Lampen oder nahem Infrarot (NIR-Strahlung), vorzugsweise in einem Temperaturbereich von 30 bis 200°C, besonders bevor zugt 40 bis 190°C und ganz besonders bevorzugt 50 bis 180°C während einer Zeit von 1 min bis zu 12 h, besonders bevorzugt 2 min bis zu 6 h und ganz besonders bevorzugt 3 min bis 4 h.

Bevorzugt wird das Verfahren zur Beschichtung von Oberflächen in den weiter oben genannten Anwendungsgebieten eingesetzt.

Die auf diese Weise aus den erfindungsgemäßen Beschichtungsmitteln hergestellten Beschichtungen, die vorzugsweise Klarlacke darstellen, zeichnen sich durch eine außerordentlich hohe Kratzbeständigkeit sowie eine sehr gute Lösungsmittel- und Chemikalienbeständigkeit aus.

In einer weiteren Ausführungsform betrifft die vorliegende Erfindung die Verwendung der oben beschriebenen erfindungsgemäßen Beschichtungsmittel zur Herstellung von Beschichtungen und Lackierungen.

Bevorzugt werden besagte Beschichtungen und Lackierungen zur Herstellung von Klarlacken verwendet.

Besonders bevorzugt ist eine Verwendung der erfindungsgemäßen Beschichtungsmittel zur Herstellung von Beschichtungen und Lackierungen in der Autoreparaturlackierung und in der Automobilserienlackierung.

Eine weitere Ausführungsform der vorliegenden Erfindung betrifft Substrate, die mit einem oder mehreren erfindungsgemäßen Beschichtungsmitteln beschichtet sind.

Das Substrat ist vorzugsweise ausgewählt aus der Gruppe bestehend aus Metall, Holz, Holzwerkstoffen, Glas, Stein, keramischen Materialien, mineralischen Baustoffen, harten und flexiblen Kunststoffen, Textilien, Leder und Papier.

Die folgenden Beispiele dienen dazu, die Erfindung zu illustrieren. Sie sind nicht dazu gedacht, den Schutzbereich der Ansprüche in irgendeiner Weise zu beschränken.

### Beispiele

Alle Prozentangaben beziehen sich, soweit nichts Anderslautendes vermerkt, auf das Gewicht.

Die Bestimmung der NCO-Gehalte erfolgte titrimetrisch nach DIN EN ISO 11909.

Die Rest-Monomeren Gehalte wurden nach DIN EN ISO 10283 gaschromatographisch mit internem Standard gemessen.

Sämtliche Viskositätsmessungen erfolgten mit einem PhysicAMCR 51 Rheometer der Fa. Anton Paar Germany GmbH (DE) nach DIN EN ISO 3219.

Die Hazen-Farbzahlen wurden an einem LICO 400 Farbmessgerät der Fa. Hach Lange GmbH, Düsseldorf, ermittelt.

Die Gehalte (mol-%) der bei der Herstellung der Silangruppen enthaltenden Thioallophanate (Ausgangsverbindungen A)) entstehenden Isocyanatfolgeprodukte Thiourethan, Thioallophanat und Isocyanurat wurden aus den Integralen protokonenentkoppelter 13C-NMR-Spektren (aufgenommen an einem Gerät Bruker DPX-400) errechnet und beziehen sich jeweils auf die Summe an vorliegenden Thiourethan-, Thioallophanat- und Isocyanuratgruppen. Die einzelnen Strukturelemente weisen folgende chemische Verschiebungen (in ppm) auf: Thiourethan: 166.8; Thioallophanat: 172.3 und 152.8; Isocyanurat: 148.4.

Der Glanz der erhaltenen Beschichtungen wurde reflektometrisch nach DIN EN ISO 2813 im 20°-Winkel gemessen.

Die Bestimmung der Pendeldämpfung nach König erfolgte nach DIN EN ISO 1522 auf Glasplatten.

Zur Prüfung der Beschichtungen auf Lösungsmittelbeständigkeit wurden jeweils kleine Mengen der Lösungsmittel Xylol, 1-Methoxypropyl-2-acetat, Ethylacetat und Aceton in Reagenzgläser gegeben und mit einem Wattebausch an der Öffnung versehen, so dass eine mit Lösungsmittel gesättigte Atmosphäre innerhalb der Reagenzgläser entstand. Die Reagenzgläser wurden anschließend mit dem Wattebausch auf die Oberfläche der auf Glas applizierten Lacke gebracht und verblieben dort für 5 Min. Nach Abwischen des Lösungsmittels wurde der Film auf Zerstörung/Erweichung/Haftverlust geprüft und bewertet (0 = keine Veränderung, 5 = Film völlig aufgelöst). Angegeben sind die Bewertungen für die vier Lösungsmittel jeweils in der Reihenfolge Xylol (X), 1-Methoxypropyl-2-acetat (MPA), Ethylacetat (EA) und Aceton (A) in Form vier aufeinanderfolgender Ziffern.

Die Nasskratzbeständigkeit der Beschichtungen wurde mittels einer Labor-Waschanlage nach DIN EN ISO 20566 geprüft. Angegeben wird der Glanzverlust in Gloss Units (GU) nach Verkratzung (10 Zyklen). Je geringer der Glanzverlust in GU, desto widerstandsfähiger ist die Beschichtung gegen Nassverkratzung.

Die Beständigkeit gegenüber einer Trockenverkratzung wurde mittels eines sogenannten Hammertests geprüft. Dabei wurde ein Hammer (Gewicht: 800 g ohne Stiel), der an seiner flachen Seite mit Polishing Paper bzw. Stahlwolle 00 bespannt war, vorsichtig im rechten Winkel auf die beschichtete Oberfläche aufgesetzt und ohne zu verkanten und ohne zusätzliche Körperkraft in einer Spur über die Beschichtung geführt. Es wurden jeweils 10 Doppelhübe durchgeführt. Nach der Belastung mit dem Verkratzungsmedium wurde die Prüffläche mit einem weichen Tuch gereinigt und anschließend der Glanz an 3 verschiedenen Stellen quer zur Verkratzungsrichtung gemessen. Je geringer der aus dem Mittelwert dieser Messungen berechnete Glanzverlust in GU, desto widerstandsfähiger ist die Beschichtung gegen Nassverkratzung.

### Herstellung der Ausgangsverbindungen

### Polyisocyanatkomponente A1)

1008 g (6 mol) Hexamethylendiisocyanat (HDI) wurden bei einer Temperatur von 80°C unter trockenem Stickstoff und Rühren vorgelegt und innerhalb von 30 min mit 196 g (1,0 mol) Mercaptopropyltrimethoxysilan versetzt. Das Reaktionsgemisch wurde weiter bei 80°C gerührt, bis nach ca. 6 Stunden der einer vollständigen Thiourethanisierung entsprechende NCO-Gehalt von 38,4 % erreicht war.

Zu diesem Zeitpunkt wurde dem Reaktionsgemisch eine Probe entnommen und die Zusammensetzung ¹³C-NMR-spektroskopisch bestimmt. Danach lagen ausschließlich Thiourethangruppen vor. Das ¹³C-NMR-Spektrum wies keine Signale von Thioallophanat- oder Isocyanuratgruppen auf.

Durch Zugabe von 0,1 g Zink-(II)-2-ethyl-1-hexanoat als Katalysator zum 80°C warmen Reaktionsgemisch wurde die Thioallophanatisierungsreaktion gestartet, wobei die Temperatur aufgrund der exotherm einsetzenden Reaktion bis auf 85°C anstieg. Es wurde weiter bei 85°C gerührt bis der NCO-Gehalt ca. 1 h nach Katalysatorzugabe auf 34,9 % abgesunken war. Die Reaktion wurde durch Zugabe von 0,1 g ortho-Phosphorsäure abgestoppt und das nicht umgesetzte monomere HDI bei einer Temperatur von 130°C und einem Druck von 0,1 mbar im Dünnschichtverdampfer abgetrennt. Man erhielt 538 g eines praktisch farblosen klaren Polyisocyanatgemisches, das folgende Kenndaten und Zusammensetzung aufwies:

| | |
|---|---|
| NCO-Gehalt: | 14,4% |
| monomeres HDI: | 0,08% |
| Viskosität (23°C): | 291 mPas |

| | |
|---|---|
| Thiourethan: | 0,0 mol-% |
| Thioallophanat: | 91,2 mol-% |
| Isocyanuratgruppen: | 8,8 mol-% |

### Polvisocvanatkomponente A2)

1008 g (6 mol) Hexamethylendiisocyanat (HDI) wurden bei einer Temperatur von 80°C unter trockenem Stickstoff und Rühren vorgelegt und mit 0,1 g Zink-(II)-2-ethyl-1-hexanoat als Katalysator versetzt. Über einen Zeitraum von ca. 30 min wurden 196 g (1,0 mol) Mercaptopropyltrimethoxysilan zugetropft, wobei die Temperatur der Mischung aufgrund der exotherm einsetzenden Reaktion bis auf 85°C anstieg. Das Rea ktionsgemisch wurde weiter bei 85°C gerührt bis der NCO-Gehalt nach ca. 2 h auf 34,9 % abgesunken war. Der Katalysator wurde durch Zugabe von 0,1 g ortho-Phosphorsäure deaktiviert und das nicht umgesetzte monomere HDI bei einer Temperatur von 130°C und ein em Druck von 0,1 mbar im Dünnschichtverdampfer abgetrennt. Man erhielt 523 g eines praktisch farblosen klaren Polyisocyanatgemisches, das folgende Kenndaten und Zusammensetzung aufwies:

| | |
|---|---|
| NCO-Gehalt: | 14,2% |
| monomeres HDI: | 0,05% |
| Viskosität (23°C): | 249 mPas |

| | |
|---|---|
| Thiourethan: | 0,0 mol-% |
| Thioallophanat: | 98,5 mol-% |
| Isocyanuratgruppen: | 1,5 mol-% |

### Polvisocvanatkomponente A3)

Nach dem für die Polyisocyanatkomponente B 2) beschriebenen Verfahren wurden 1344 g (8 mol) HDI in Gegenwart von 0,15 g Zink-(II)-2-ethyl-1-hexanoat mit 196 g (1,0 mol) Mercaptopropyltrimethoxysilan bei einer Temperatur von 85°C bis zu einem NCO-Gehalt von 38,2 % umgesetzt. Nach Abstoppen der Reaktion mit 0,15 g ortho-Phosphorsäure und destillativer Aufarbeitung im Dünnschichtverdampfer erhielt man 528 g eines praktisch farblosen klaren Polyisocyanatgemisch, das folgende Kenndaten und Zusammensetzung aufwies:

| | |
|---|---|
| NCO-Gehalt: | 15,2 % |
| monomeres HDI: | 0,12 % |
| Viskosität (23°C): | 209 mPas |

| | |
|---|---|
| Thiourethan: | 0,0 mol-% |
| Thioallophanat: | 99,0 mol-% |
| Isocyanuratgruppen: | 1,0 mol-% |

### Polvisocvanatkomponente A4)

Nach dem für die Polyisocyanatkomponente B 2) beschriebenen Verfahren wurden 672 g (4 mol) HDI in Gegenwart von 0,1 g Zink-(II)-2-ethyl-1-hexanoat mit 196 g (1,0 mol) Mercaptopropyltrimethoxysilan bei einer Temperatur von 85°C bis zu einem NCO-Gehalt von 29,0 % umgesetzt. Nach Abstoppen der Reaktion mit 0,1 g ortho-Phosphorsäure und destillativer Aufarbeitung im Dünnschichtverdampfer erhielt man 486 g eines praktisch farblosen klaren Polyisocyanatgemisch, das folgende Kenndaten und Zusammensetzung aufwies:

| | |
|---|---|
| NCO-Gehalt: | 12,9 % |
| monomeres HDI: | 0,06 % |
| Viskosität (23°C): | 298 mPas |

| | |
|---|---|
| Thiourethan: | 0,0 mol-% |
| Thioallophanat: | 98,3 mol-% |
| Isocyanuratgruppen: | 1,7 mol-% |

### Polvisocvanatkomponente A5)

Nach dem für die Polyisocyanatkomponente B 2) beschriebenen Verfahren wurden 756 g (4,5 mol) HDI in Gegenwart von 0,1 g Zink-(II)-2-ethyl-1-hexanoat mit 294 g (1,5 mol) Mercaptopropyltrimethoxysilan bei einer Temperatur von 85°C bis zu einem NCO-Gehalt von 24,0 % umgesetzt. Nach Abstoppen der Reaktion mit 0,1 g ortho-Phosphorsäure und destillativer Aufarbeitung im Dünnschichtverdampfer erhielt man 693 g eines praktisch farblosen klaren Polyisocyanatgemisch, das folgende Kenndaten und Zusammensetzung aufwies:

| | |
|---|---|
| NCO-Gehalt: | 11,8 % |
| monomeres HDI: | 0,06 % |
| Viskosität (23°C): | 452 mPas |

| | |
|---|---|
| Thiourethan: | 0,0 mol-% |
| Thioallophanat: | 99,0 mol-% |
| Isocyanuratgruppen: | 1,0 mol-% |

| | |
|---|---|
| Si-Gehalt (berechnet): | 6,1 % |

### Polvisocvanatkomponente A6)

Nach dem für die Polyisocyanatkomponente B 2) beschriebenen Verfahren wurden 756 g (4,5 mol) HDI in Gegenwart von 0,1 g Zink-(II)-2-ethyl-1-hexanoat mit 357 g (1,5 mol) Mercaptopropyltriethoxysilan bei einer Temperatur von 85°C bis zu einem NCO-Gehalt von 22,6 % umgesetzt. Nach Abstoppen der Reaktion mit 0,1 g ortho-Phosphorsäure und destillativer Aufarbeitung im Dünnschichtverdampfer erhielt man 715 g eines praktisch farblosen klaren Polyisocyanatgemisch, das folgende Kenndaten und Zusammensetzung aufwies:

| | |
|---|---|
| NCO-Gehalt: | 11,3% |
| monomeres HDI: | 0,21 % |
| Viskosität (23°C): | 267 mPas |

| | |
|---|---|
| Thiourethan: | 0,0 mol-% |
| Thioallophanat: | 98,4 mol-% |
| Isocyanuratgruppen: | 1,6 mol-% |

### Polvisocvanatkomponente A7)

504 g (3,0 mol) HDI wurden bei einer Temperatur von 80°C unter trockenem Stickstoff und Rühren vorgelegt und innerhalb von 30 min mit 588 g (3,0 mol) Mercaptopropyltrimethoxysilan versetzt. Das Reaktionsgemisch wurde weiter bei 80°C gerührt, bis nach ca. 12 Stunden der einer vollständigen Thiourethanisierung entsprechende NCO-Gehalt von 11,5 % erreicht war. Es wurden 0,1 g Zink-(II)-2-ethyl-1-hexanoat als Katalysator zum 80°C warmen Reaktionsgemisch zugegeben, worauf die Temperatur aufgrund der exotherm einsetzenden Thioallophanatisierungsreaktion Reaktion bis auf 85°C anstieg. Das Gemisch wurde weiter bei 85°C gerührt bis der NCO-Gehalt ca. 4 h nach Ka talysatorzugabe auf 3,0 % abgesunken war. Anschließend wurde die Reaktion wurde durch Zugabe von 0,1 g ortho-Phosphorsäure abgestoppt. Es lag ein praktisch farbloses klares Polyisocyanatgemisch vor, das folgende Kenndaten und Zusammensetzung aufwies:

| | |
|---|---|
| NCO-Gehalt: | 3,0 % |
| monomeres HDI: | 0,69 % |
| Viskosität (23°C): | 9.220 mPas |

| | |
|---|---|
| Thiourethan: | 23,2 mol-% |
| Thioallophanat: | 66,6 mol-% |
| Isocyanuratgruppen: | 10,2 mol-% |

### Polvisocvanatkomponente A8)

1332 g (6 mol) Isophorondiisocyanat (IPDI) wurden bei einer Temperatur von 95°C unter trockenem Stickstoff und Rühren vorgelegt und mit 0,2 g Zink-(II)-2-ethyl-1-hexanoat als Katalysator versetzt. Über einen Zeitraum von ca. 30 min wurden 196 g (1,0 mol) Mercaptopropyltrimethoxysilan zugetropft, wobei die Temperatur der Mischung aufgrund der exotherm einsetzenden Reaktion bis auf 103°C anstieg. Das Re aktionsgemisch wurde weiter bei 100°C gerührt bis der NCO-Gehalt nach ca. 5 h auf 2 7,4 % abgesunken war. Der Katalysator wurde durch Zugabe von 0,2 g ortho-Phosphorsäure deaktiviert und das nicht umgesetzte monomere IPDI bei einer Temperatur von 160°C und einem Druck von 0,1 mbar im Dünnschichtverdampfer abgetrennt. Man erhielt 659 g eines hellgelben klaren Polyisocyanatgemisches, das folgende Kenndaten und Zusammensetzung aufwies:

| | |
|---|---|
| NCO-Gehalt: | 11,6 % |
| monomeres IPDI: | 0,46 % |
| Viskosität (23°C): | 11.885 mPas |

| | |
|---|---|
| Thiourethan: | 1,3 mol-% |
| Thioallophanat: | 93,4 mol-% |
| Isocyanuratgruppen: | 4,3 mol-% |

### Polvisocvanatkomponente A9)

Zu 756 g (4,5 mol) HDI wurden bei einer Temperatur von 80°C unter trockenem Stickstoff und Rühren über einen Zeitraum von ca. 30 min 196 g (1,0 mol) Mercaptopropyltrimethoxysilan zugetropft. Das Reaktionsgemisch wurde anschließend auf 140°C erwärmt und weiter gerührt bis der NCO-Gehalt nach ca. 5 h auf 24,0 % abgesunken war. Nach destillativer Aufarbeitung im Dünnschichtverdampfer erhielt man 685 g eines praktisch farblosen klaren Polyisocyanatgemisches, das folgende Kenndaten und Zusammensetzung aufwies:

| | |
|---|---|
| NCO-Gehalt: | 11,8 % |
| monomeres HDI: | 0,08 % |
| Viskosität (23°C): | 447 mPas |

| | |
|---|---|
| Thiourethan: | 0,0 mol-% |
| Thioallophanat: | 98,6 mol-% |
| Isocyanuratgruppen: | 1,4 mol-% |

### Polvisocvanatkomponenten A10) - A13) und Vergleichspolyisocyanat V1)

80 Gew.-Teile eines monomerarmen Polyisocyanuratpolyisocyanates auf Basis von HDI mit einem NCO-Gehalt von 21,6 %, einer mittleren Isocyanatfunktionalität von 3,5 und einer Viskosität (23°C) von 3200 mPas wurden mit 20 Gew.-Teilen des Thioallophanatpolyisocyanates A5) versetzt und durch 30 minütiges Rühren bei 60°C zu einem silanfunktionellen Polyisocyanatgemisch A10) homogenisiert. Nach dem gleichen Verfahren wurden unter Verwendung der in der unten stehenden Tabelle 1 aufgeführten Mengen der gleichen Ausgangskomponenten die silanfunktionellen Polyisocyanatgemische A11) bis A13) hergestellt.

Zum Vergleich wurde in Anlehnung an Beispiel 1 der WO 2009/156148 durch lösungsmittelfreie Umsetzung von 79 Gew.-Teilen des oben beschriebenen monomerarmen Polyisocyanuratpolyisocyanates auf Basis von HDI (NCO-Gehalt: 21,6 %; mittlere NCO-Funktionalität: 3,5; Viskosität (23°C): 3200 mPas) mit 21 Ge w.-Teilen Mercaptopropyltrimethoxysilan in Gegenwart von 500 ppm Dibutylzinndilaurat als Katalysator bei 60°C ein teilsilanisiertes HDI-Trimerisat (Vergleichspolyisocyanat V1) hergestellt.

Die nachfolgende Tabelle 1 zeigt Zusammensetzungen (Gew.-Teile) und Kenndaten der silanfunktionellen Polyisocyanatgemische A10) bis A13) sowie die Kenndaten des Vergleichspolyisocyanates V1) nach WO 2009/156148.

**Tabelle 1:**

| **Polyisocyanat** | **A10)** | **A11)** | **A12)** | **A13)** | **V1)** |
|---|---|---|---|---|---|
| HDI-Polyisocyanurat | 80 | 70 | 60 | 50 | - |
| Polyisocyanat A5) | 20 | 30 | 40 | 50 | - |
| NCO-Gehalt [%] | 19,6 | 18,7 | 17,6 | 16,7 | 12,6 |
| Viskosität (23°C) [mPas] | 2240 | 1820 | 1490 | 1210 | 11800 |
| mittlere NCO-Funktionalität | 3,2 | 3,1 | 2,9 | 2,8 | 2,6 |

Der direkte Vergleich des silanfunktionellen Polyisocyanatgemisches A13) mit dem Vergleichspolyisocyanat V1) gemäß WO 2009/156148, die beide einen Gehalt an Silangruppen (berechnet als -Si(OCH₃)₃; Mol.-Gewicht = 121 g/mol) von 13 % aufweisen, belegt eindrucksvoll den deutlichen Vorteil der silanfunktionellen Thioallophanatpolyisocyanate bezüglich Isocyanatgehalt, -funktionalität und Viskosität gegenüber dem bisherigen Stand der Technik.

### Vergleichspolyisocyanat V2)

In Anlehnung an ein Ausführungsbeispiel der WO 2012/168079 (Härtersystem VB2-1) wurden durch Umsetzung von 100 Gew.-Teilen des oben beschriebenen monomerarmen Polyisocyanuratpolyisocyanates auf Basis von HDI (NCO-Gehalt: 21,6 %; mittlere NCO-Funktionalität: 3,5; Viskosität (23°C): 3200 mPas) mit ein er Mischung aus 30 Gew.-Teilen Bis-[3-(trimethoxysilyl)-propyl]-amin und 21 Gew.-Teilen N-[3-(Trimethoxysilyl)-propyl]-butylamin in 84 Gew.-Teilen Butylacetat bei 50°C ein teilsilanis iertes HDI-Trimerisat hergestellt. Nach einer Reaktionszeit von ca. 4 h wurden für die vorliegende Lösung folgende Kenndaten gefunden:

| | |
|---|---|
| NCO-Gehalt: | 6,0 % |
| mittlere NCO-Funktionalität: | 2,3 |
| Festkörpergehalt: | 64 % |
| Viskosität (23°C): | 70 mPas |

| | |
|---|---|
| Si-Gehalt (berechnet): | 4,1 % |

### Beispiele 1 - 4 (erfindungsgemäß und Vergleich, Automobilklarlack)

Zur Herstellung eines erfindungsgemäßen Beschichtungsmittels wurden 44,60 Gew.-Teile eines handelsüblichen Polyacrylatpolyols (Setalux 1774 SS-65; Fa. Nuplex Resins, Bitterfeld-Wolfen, DE) mit einem Festkörpergehalt von 65 Gew.-% und einer OH-Zahl (bezogen auf Festkörper) von 165 mg KOH/g, entsprechend einem Äquivalentgewicht von 340 g/val OH, mit 0,6 Gew.-Teilen einer 10 %igen Lösung eines handelsüblichen Verlaufsadditivs in Butylacetat (BYK 331; BYK-Chemie GmbH, Wesel, DE) und 6,0 Gew.-Teilen einer 10 %igen Lösung von Tetrabutylbenzoat (TBAB) in MPAbei Raumtemperatur durch intesives Rühren homogen vermischt. Anschließend wurden 30,35 Gew.-Teile des Silangruppen enthaltenden Thioallophanats A5), entsprechend einem Äquivalentverhältnis von Isocyanatgruppen zu Hydroxylgruppen von 1 : 1 als Vernetzerkomponente eingerührt und der Festkörper des fertigen Beschichtungsmittels mit einer 1 : 1-Mischung aus MPAund SolventnaphtA100 auf 60 % eingestellt.

Nach dem gleichen Verfahren wurden aus Setalux 1774 SS-65 unter Verwendung der Polyisocyanate A13), V2) sowie dem V2) zugrunde liegenden monomerarmen HDI-Polyisocyanuratpolyisocyanat Beschichtungsmittel (erfindungsgemäß und Vergleich) hergestellt und ebenfalls auf einen Festkörpergehalt von 60 % eingestellt. Dabei wurde in Beispiel 4 (silangruppen-freies Bindemittel) auf die Mitverwendung des Katalysators verzichtet.

Zur Bestimmung der Pendeldämpfung und Prüfung der Lösungsmittelbeständigkeit wurden die Beschichtungsmittel jeweils mittels einer Lackhantel in einer Auftrags-Schichtdicke von 50 µm auf Glasplatten aufgebracht und nach 10 minütigem Ablüften bei Raumtemperatur innerhalb von 30 Minuten bei 140°C ausgehärtet.

Die Prüfung der Kratzbeständigkeit erfolgte an kompletten OEM-Mehrschichtlackaufbauten. Hierzu wurden die erfindungsgemäßen Beschichtungsmittel und Vergleichsbeschichtungen mittels einer Lackhantel in einer Auftrags-Schichtdicke von 50 µm als Klarlacke auf Aluminiumbleche appliziert, die zuvor mit einem handelüblichen 1K-OEM-Hydrofüllerlack und einem konventionellen schwarzen 1K-OEM-Hydrobasislack beschichtet worden waren. Während der Hydrofüller durch Einbrennen bei 165°C innerhalb von 20 min vollständig ausgehärtet war, wurde der Hydrobasislack lediglich für 10 Minuten bei 80°C vorgetrocknet. Nach dem Aufbringen der Klarlacke wurden die Basislackschicht und die Klarlackschicht gemeinsam innerhalb von 30 Minuten bei 140°C ausgehärtet.

Die nachstehende Tabelle 2 zeigt die Zusammensetzungen der Beschichtungsmittel in Gew.-Teilen sowie die Ergebnisse der anwendungstechnischen Prüfungen im Vergleich, jeweils nach einer Lagerzeit von 24 h bei 23°C sowi e einem 16 stündigen Nachtempern bei 60°C.

**Tabelle 2:**

| **Beispiel** | | **1** | **2** | **3** (Vergleich) | **4** (Vergleich) |
|---|---|---|---|---|---|
| *Formulierung* | | | | | |
| Setalux 1774 SS-65, Lff. | | 44,60 | 52,48 | 39,38 | 58,63 |
| Polyisocyanat A5) | | 30,35 | -- | -- | -- |
| Polyisocyanat A13) | | -- | 25,23 | -- | -- |
| Vergleichspolyisocyanat V2) | | -- | -- | 52,72 | -- |
| HDI-Polyisocyanuratpolyisocyanat | | -- | -- | -- | 21,81 |
| Byk 331, 10%ig in BA | | 0,60 | 0,60 | 0,60 | 0,60 |
| TBAB, 10%ig in MPA | | 6,00 | 6,00 | 6,00 | -- |
| MPA/ SN 100 (1:1) | | 18,45 | 15,69 | 1,30 | 18,96 |
| Summe Gew.-Teile | | 100,00 | 100,00 | 100,00 | 100,00 |
| | | | | | |
| Festkörper | | 60,0 % | 60,0 % | 60,0 % | 60,0 % |
| Si-Gehalt auf Bindemittel, Festharz | | 3,1 % | 1,5 % | 3,6 % | -- |
| Si-Gehalt auf Lack | | 1,8 % | 0,9 % | 2,2 % | -- |
| | | | | | |
| Ausgangsglanz (20°) | | 89,2 | 89,4 | 88,9 | 89,1 |
| Pendeldämpfung | 24 h / 23°C | 192 s | 201 s | 215 s | 212 s |
| | 16h / 60°C | 192 s | 196 s | 200 s | 212 s |
| Lösungsmittelbeständigkeit (X, MPA, EA, A) | 24 h / 23°C | 0, 0, 1, 2 | 0, 0, 1, 4 | 0, 0, 0, 1 | 1, 1, 4, 4 |
| | 16 h / 60°C | 0, 0, 1, 2 | 0, 0, 1, 2 | 0, 0, 0, 1 | 1, 0, 2, 4 |
| Nasskratzbeständigkeit | 24 h / 23°C | 15 GU | 18 GU | 16 GU | 33 GU |
| | 16 h / 60°C | 16 GU | 20 GU | 17 GU | 33 GU |
| Trockenkratzbeständigkeit mit Polishing Paper | 24 h / 23°C | 8 GU | 22 GU | 14 GU | 54 GU |
| | 16 h / 60°C | 13 GU | 23 GU | 13 GU | 53 GU |
| Trockenkratzbeständigkeit mit Stahlwolle | 24 h / 23°C | 3 GU | 8 GU | 3 GU | 50 GU |
| | 16 h / 60°C | 3 GU | 12 GU | 3 GU | 50 GU |

Wie die in Tabelle 2 dargestellten Ergebnisse zeigen, führen die erfindungsgemäßen, unter Verwendung der neuen Silangruppen enthaltenden Thioallophanatpolyisocyanate hergestellten Beschichtungsmittel (Beispiele 1 und 2) zu harten, hoch glänzenden Lacken, die sich gegenüber dem silangruppenfreien Vergleichslack (Beispiel 4) durch sehr gute Lösungsmittelbeständigkeiten und hervorragende Kratzbeständigkeiten auszeichen.

Dabei zeigt die erfindungsgemäße Beschichtung aus Beispiel 1 auch gegenüber dem unter Verwendung des silanmodifizierten Vergleichspolyisocyanates des Standes der Technik (Beispiel 3) hergestellten Lack noch einmal deutliche Verbesserungen bezüglich Nass- und Trockenkratzbeständigkeit.

## Patentansprüche

1. Nichtwässrige Beschichtungsmittel, enthaltend
A) mindestens eine Polyisocyanatkomponente,
B) mindestens eine hydroxyfunktionelle Bindemittelkomponente,
C) mindestens einen Katalysator zur Vernetzung von Silangruppen und
D) gegebenenfalls weitere Hilfs- und Zusatzstoffe,
wobei die Polyisocyanatkomponente A) mindestens ein Silangruppen enthaltendes Thioallophanat der allgemeinen Formel (I) 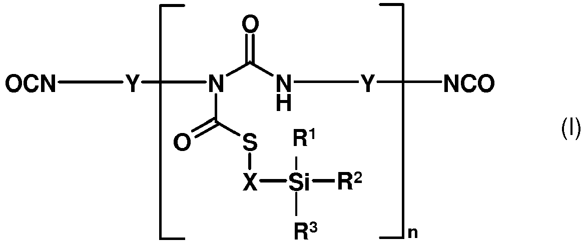 enthält, in welcher
R¹, R² und R³ für gleiche oder verschiedene Reste stehen und jeweils einen gesättigten, linearen oder verzweigten, aliphatischen oder cycloaliphatischen Rest mit bis zu 6 Kohlenstoffatomen bedeuten, der gegebenenfalls bis zu 3 Sauerstoffatome enthalten kann,
X für einen linearen oder verzweigten Alkylenrest mit 2 bis 10 Kohlenstoffatomen steht,
Y einen linearen oder verzweigten, aliphatischen oder cycloaliphatischen Rest mit 5 bis 13 Kohlenstoffatomen bedeutet und
n für eine ganze Zahl von 1 bis 20 steht.

2. Beschichtungsmittel gemäß Anspruch 1, **dadurch gekennzeichnet, dass** die Polyisocyanatkomponente A) mindestens ein Silangruppen enthaltendes Thioallophanat der Formel (I) enthält, in welcher
R¹, R² und R³ jeweils Alkylreste mit bis zu 6 Kohlenstoffatomen und/oder Alkoxyreste, die bis zu 3 Sauerstoffatomen enthalten, bedeuten, mit der Maßgabe, daß mindestens einer der Reste R¹, R² und R³ für einen solchen Alkoxyrest steht, und
X für einen Propylenrest (-CH₂-CH₂-CH₂-) steht,
Y und n die in Anspruch 1 genannte Bedeutung haben.

3. Beschichtungsmittel gemäß Anspruch 1, **dadurch gekennzeichnet, dass** die Polyisocyanatkomponente A) mindestens ein Silangruppen enthaltendes Thioallophanat der Formel (I) enthält, in welcher
R¹, R² und R³ für gleiche oder verschiedene Reste stehen und jeweils Methyl, Methoxy oder Ethoxy bedeuten, mit der Maßgabe, daß mindestens einer der Reste R¹, R² und R³ für einen Methoxy- oder Ethoxyrest steht,
X für einen Propylenrest (-CH₂-CH₂-CH₂-) steht, und
Y und n die in Anspruch 1 genannte Bedeutung haben.

4. Beschichtungsmittel gemäß Anspruch 1, **dadurch gekennzeichnet, dass** die Polyisocyanatkomponente A) mindestens ein Silangruppen enthaltendes Thioallophanat der Formel (I) enthält, in welcher
Y einen aliphatischen und/oder cycloaliphatischen Rest bedeutet, wie er durch Entfernen der Isocyanatgruppen aus einem Diisocyanat, ausgewählt aus der Reihe 1,5-Diisocyanatopentan, 1,6-Diisocyanatohexan, 1-Isocyanato-3,3,5-trimethyl-5-isocyanatomethyl-cyclohexan, 2,4'- und/oder 4,4'-Diisocyanatodicyclohexylmethan erhalten wird.

5. Beschichtungsmittel gemäß Anspruch 1 bis 4, **dadurch gekennzeichnet, dass** die hydroxyfunktionelle Bindemittelkomponente B) mindestens ein Polyesterpolyol, Polyetherpolyol, Polycarbonatpolyol und/oder Polyacrylatpolyol enthält.

6. Beschichtungsmittel gemäß Anspruch 5, **dadurch gekennzeichnet, dass** die hydroxyfunktionelle Bindemittelkomponente B) mindestens ein Polyacrylatpolyol enthält, das gegebenenfalls im Gemisch mit Polyesterpolyolen und/oder Polycarbonatpolyolen vorliegt.

7. Beschichtungsmittel gemäß Anspruch 1 bis 6, **dadurch gekennzeichnet, dass** die Katalysatorkomponente C) mindestens einen sauren Phosphorsäureester, Phosphonsäureester und/oder eine Sulfonsäure, die gegebenenfalls in mit Aminen blockierter Form vorliegen können, und/oder mindestens ein Tetraalkylammoniumcarboxylat enthält.

8. Beschichtungsmittel gemäß Anspruch 7, **dadurch gekennzeichnet, dass** die Katalysatoren C) als Einzelsubstanz oder in Form beliebiger Gemische untereinander in Mengen von 0,005 Gew.-% bis zu 5 Gew.-%, berechnet als Summe aller eingesetzten Katalysatoren C) bezogen auf die Gesamtmenge aus Polyisocyanatkomponente A) und hydroxyfunktioneller Bindemittelkomponente B) zum Einsatz kommt.

9. Verfahren zur Herstellung der Beschichtungsmittel gemäß Anspruch 1 bis 8, **dadurch gekennzeichnet, dass** man die Einzelkomponenten A), B), C) und gegebenenfalls D) in beliebiger Reihenfolge nacheinander oder gemeinsam in solchen Mengenverhältnissen mischt, dass auf jede Isocyanatgruppe der Polyisocyanatkomponente A) 0,5 bis 3,0 Hydroxylgruppen der Bindemittelkomponente B) entfallen.

10. Verwendung der Beschichtungsmittel gemäß Anspruch 1 bis 8 zur Herstellung von Beschichtungen.

11. Verwendung der Beschichtungsmittel gemäß Anspruch 10 zur Herstellung von Beschichtungen und Lackierungen, insbesondere Klarlacken, in der Autoreparaturlackierung und Automobilserienlackierung.

12. Verwendung der Beschichtungsmittel gemäß Anspruch 10 und 11, **dadurch gekennzeichnet, dass** die Beschichtungsmittel in einem Temperaturbereich von 30 bis 200°C ausgehärtet werden.

13. Mit Beschichtungsmitteln gemäß Anspruch 1 bis 8 beschichtete Substrate.

## Claims

1. Nonaqueous coating composition comprising
A) at least one polyisocyanate component,
B) at least one hydroxy-functional binder component,
C) at least one catalyst for the crosslinking of silane groups, and
D) optionally further auxiliaries and additives,
where the polyisocyanate component A) comprises at least one thioallophanate containing silane groups, of the general formula (I), 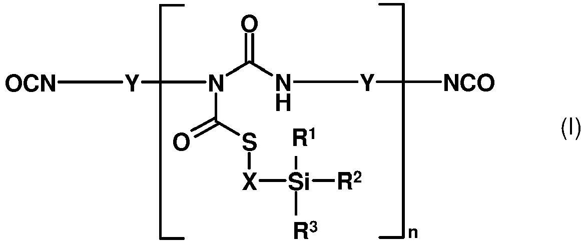 in which
R¹, R² and R³ are identical or different radicals and are each a saturated, linear or branched, aliphatic or cycloaliphatic radical having up to 6 carbon atoms, and may optionally contain up to 3 oxygen atoms,
X is a linear or branched alkylene radical having 2 to 10 carbon atoms,
Y is a linear or branched, aliphatic or cycloaliphatic radical having 5 to 13 carbon atoms and
n is an integer from 1 to 20.

2. Coating composition according to Claim 1, **characterized in that** the polyisocyanate component A) comprises at least one thioallophanate containing silane groups, of the formula (I), in which
R¹, R² and R³ are each alkyl radicals having up to 6 carbon atoms and/or alkoxy radicals which contain up to 3 oxygen atoms, with the proviso that at least one of the radicals R¹, R² and R³ is such an alkoxy radical, and
X is a propylene radical (-CH₂-CH₂-CH₂-),
Y and n have the definition stated in Claim 1.

3. Coating composition according to Claim 1, **characterized in that** the polyisocyanate component A) comprises at least one thioallophanate containing silane groups, of the formula (I), in which
R¹, R² and R³ are identical or different radicals and are each methyl, methoxy or ethoxy, with the proviso that at least one of the radicals R¹, R² and R³ is a methoxy or ethoxy radical,
X is a propylene radical (-CH₂-CH₂-CH₂-), and
Y and n have the definition stated in Claim 1.

4. Coating composition according to Claim 1, **characterized in that** the polyisocyanate component A) comprises at least one thioallophanate containing silane groups, of the formula (I), in which
Y is an aliphatic and/or cycloaliphatic radical as obtained by removing the isocyanate groups from a diisocyanate selected from the series of 1,5-diisocyanatopentane, 1,6-diisocyanatohexane, 1-isocyanato-3,3,5-trimethyl-5-isocyanatomethylcyclohexane, 2,4'-and/or 4,4'-diisocyanatodicyclohexylmethane.

5. Coating composition according to Claim 1 to 4, **characterized in that** the hydroxy-functional binder component B) comprises at least one polyester polyol, polyether polyol, polycarbonate polyol and/or polyacrylate polyol.

6. Coating composition according to Claim 5, **characterized in that** the hydroxy-functional binder component B) comprises at least one polyacrylate polyol optionally present in a mixture with polyester polyols and/or polycarbonate polyols.

7. Coating composition according to Claim 1 to 6, **characterized in that** the catalyst component C) comprises at least one acidic phosphoric ester, phosphonic ester and/or a sulfonic acid, which may optionally be present in amine-blocked form, and/or at least one tetraalkylammonium carboxylate.

8. Coating composition according to Claim 7, **characterized in that** the catalysts C) are employed as individual substances or in the form of any desired mixtures with one another in amounts of 0.005 wt% up to 5 wt%, calculated as the sum total of all catalysts C) used, based on the total amount of polyisocyanate component A) and hydroxy-functional binder component B).

9. Method for producing the coating composition according to Claim 1 to 8, **characterized in that** the individual components A), B), C) and optionally D) are mixed in any order in succession or together in proportions such that for each isocyanate group in the polyisocyanate component A) there are 0.5 to 3.0 hydroxyl groups of the binder component B).

10. Use of the coating composition according to Claim 1 to 8 for producing coatings.

11. Use of the coating composition according to Claim 10 for producing coatings and paint systems, more particularly clearcoats, in automotive refinishing and automotive OEM finishing.

12. Use of the coating composition according to Claim 10 and 11, **characterized in that** the coating composition is cured in a temperature range from 30 to 200°C.

13. Substrate coated with a coating composition according to Claim 1 to 8.

## Revendications

1. Agent de revêtement non aqueux, contenant
A) au moins un composant de polyisocyanate,
B) au moins un composant de liant fonctionnalisé par hydroxy,
C) au moins un catalyseur pour la réticulation de groupes silane et
D) éventuellement des auxiliaires et des additifs supplémentaires,
le composant de polyisocyanate A) contenant au moins un thioallophanate contenant des groupes silane, de formule générale (I) 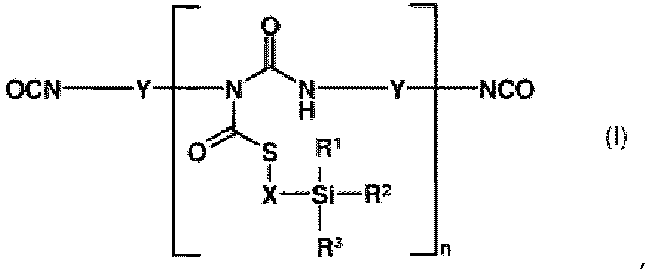 dans laquelle
R¹, R² et R³ représentent des radicaux identiques ou différents et signifient à chaque fois un radical aliphatique ou cycloaliphatique saturé, linéaire ou ramifié, comportant jusqu'à 6 atomes de carbone, qui peut éventuellement contenir jusqu'à 3 atomes d'oxygène,
X représente un radical alkylène linéaire ou ramifié comportant 2 à 10 atomes de carbone,
Y signifie un radical aliphatique ou cycloaliphatique, linéaire ou ramifié, comportant 5 à 13 atomes de carbone et
n représente un nombre entier de 1 à 20.

2. Agent de revêtement selon la revendication 1, **caractérisé en ce que** le composant de polyisocyanate A) contient au moins un thioallophanate contenant des groupes silane, de formule (I), dans laquelle
R¹, R² et R³ signifient à chaque fois des radicaux alkyle comportant jusqu'à 6 atomes de carbone et/ou des radicaux alcoxy, qui contiennent jusqu'à 3 atomes d'oxygène, étant entendu qu'au moins l'un des radicaux R¹, R² et R³ représente un tel radical alcoxy, et
X représente un radical propylène (-CH₂-CH₂-CH₂-),
Y et n possèdent la signification mentionnée dans la revendication 1.

3. Agent de revêtement selon la revendication 1, **caractérisé en ce que** le composant de polyisocyanate A) contient au moins un thioallophanate contenant des groupes silane, de formule (I), dans laquelle
R¹, R² et R³ représentent des radicaux identiques ou différents et signifient à chaque fois méthyle, méthoxy ou éthoxy, étant entendu qu'au moins l'un des radicaux R¹, R² et R³ représente un radical méthoxy ou éthoxy, et
X représente un radical propylène (-CH₂-CH₂-CH₂-), et
Y et n possèdent la signification mentionnée dans la revendication 1.

4. Agent de revêtement selon la revendication 1, **caractérisé en ce que** le composant de polyisocyanate A) contient au moins un thioallophanate contenant des groupes silane, de formule (I), dans laquelle
Y signifie un radical aliphatique et/ou cycloaliphatique, comme obtenu par l'élimination des groupes isocyanate d'un diisocyanate choisi dans la série 1,5-diisocyanatopentane, 1,6-diisocyanatohexane, 1-isocyanato-3,3,5-triméthyl-5-isocyanatométhylcyclohexane, 2,4'-diisocyanatodicyclohexylméthane et/ou 4,4'-diisocyanatodicyclohexylméthane.

5. Agent de revêtement selon les revendications 1 à 4, **caractérisé en ce que** le composant de liant fonctionnalisé par hydroxy B) contient au moins un polyesterpolyol, un polyétherpolyol, un polycarbonatepolyol et/ou un polyacrylatepolyol.

6. Agent de revêtement selon la revendication 5, **caractérisé en ce que** le composant de liant fonctionnalisé par hydroxy B) contient au moins un polyacrylatepolyol qui est éventuellement présent en mélange avec des polyesterpolyols et/ou des polycarbonatepolyols.

7. Agent de revêtement selon les revendications 1 à 6, **caractérisé en ce que** le composant de catalyseur C) contient au moins un ester d'acide phosphorique acide, un ester d'acide phosphonique et/ou un acide sulfonique, qui peuvent éventuellement être présents sous forme bloquée par des amines, et/ou au moins un carboxylate de tétraalkylammonium.

8. Agent de revêtement selon la revendication 7, **caractérisé en ce que** les catalyseurs C) sont utilisés en tant que substance individuelle ou sous forme de quelconques mélanges les uns avec les autres en des quantités de 0,005 % en poids à 5 % en poids, calculées en tant que somme de tous les catalyseurs C) utilisés par rapport à la quantité totale du composant de polyisocyanate A) et du composant de liant fonctionnalisé par hydroxy B).

9. Procédé pour la préparation des agents de revêtement selon les revendications 1 à 8, **caractérisé en ce qu'**on mélange les composants individuels A), B), C) et éventuellement D) dans un ordre quelconque les uns après les autres ou ensemble en des rapports de quantité tels, qu'à chaque groupe isocyanate du composant de polyisocyanate A) correspondent 0,5 à 3,0 groupes hydroxyle du composant de liant B).

10. Utilisation des agents de revêtement selon les revendications 1 à 8 pour la préparation de revêtements.

11. Utilisation des agents de revêtement selon la revendication 10 pour la préparation de revêtements et de laquages, en particulier de laques transparentes, dans le laquage de réparation d'automobile et le laquage en série d'automobiles.

12. Utilisation des agents de revêtement selon les revendications 10 et 11, **caractérisée en ce que** les agents de revêtement sont durcis dans un domaine de température de 30 à 200 °C.

13. Substrats revêtus avec les agents de revêtement selon les revendications 1 à 8.
